# EUROPEAN PATENT APPLICATION

(11) **EP 4 838 923 A1**
(43) Date of publication of application: **11.11.2026**
(21) Application number: 25744516.3
(22) Date of filing: 16.01.2025
(51) Int. Cl.: H04W 12/06

(54) **ACCESS AUTHENTICATION METHOD AND RELATED APPARATUS**

(30) Priority: 22.01.2024 CN 202410095134
(71) Applicant: Huawei Technologies Co., Ltd., Shenzhen, Guangdong 518129 (CN)
(72) Inventor: WANG, Donghui, Shenzhen, Guangdong 518129 (CN); SONG, Yurong, Shenzhen, Guangdong 518129 (CN); XIAO, Xun, Shenzhen, Guangdong 518129 (CN); LIU, Faye, Shenzhen, Guangdong 518129 (CN)
(74) Representative: Pfenning, Meinig & Partner mbB
(86) International application number: PCT/CN2025/072874
(87) International publication number: WO 2025/157074

(57) **Abstract**

An access authentication method and a related apparatus are provided. The method includes: A terminal obtains a user identifier, and sends the user identifier to a verification network element. Correspondingly, the verification network element receives the user identifier, and obtains, from a storage network element, profile information corresponding to the user identifier, where the profile information includes a public key of the terminal. Further, the verification network element authenticates the terminal based on the profile information, where the verification network element is a network element of a target operator accessed by the terminal. In other words, even if the verification network element is not a network element of a home operator, the verification network element may also obtain the profile information corresponding to the user identifier, to complete authentication on the terminal, without returning to the home operator for authentication. This helps simplify an authentication procedure.

## Description

This application claims priority to Chinese Patent Application No. 202410095134.X, filed with the China National Intellectual Property Administration on January 22, 2024 and entitled "ACCESS AUTHENTICATION METHOD AND RELATED APPARATUS", which is incorporated herein by reference in its entirety.

### TECHNICAL FIELD

This application relates to the communication field, and in particular, to an access authentication method and a related apparatus.

### BACKGROUND

Currently, a user (or a user card) needs to be bound with an operator, and multi-operator one-card cannot be implemented. In other words, each operator independently manages its own user information, and even for the same type of operators in different areas, their respective user information is managed independently. Operators need to maintain massive user information, which poses a risk of leakage caused by single-point attacks. In addition, network access authentication is generally controlled by a home operator, where the home operator is an operator in a place where a user subscribes.

If a terminal is located in a region outside a home location, the terminal needs to be subjected to access authentication performed by the home operator when accessing a network. For example, a user subscribes to a mobile operator in a region A, but the user is located in a region B. Therefore, the user accesses a mobile operator in the region B. A specific access authentication procedure includes: When accessing a network, a terminal needs to send a user identifier to a serving network (a network in the region B), the serving network sends the user identifier to a home network, and the home network completes access authentication on the terminal. In other words, the serving network cannot perform access authentication on the terminal, making the entire procedure relatively complex and resulting in poor user experience.

### SUMMARY

This application provides an access authentication method and a related apparatus, so that a secure and flexible authentication procedure can be provided, thereby improving service experience.

According to a first aspect, this application provides an access authentication method. The method may be performed by an access authentication apparatus. The access authentication apparatus may be a verification network element, may be a component (for example, a chip or a chip system) configured in the verification network element, or may be a logical module or software that can implement all or some functions of the verification network element. This is not limited in this application.

In this application, the verification network element is a network element of a target operator accessed by a terminal. For example, the verification network element may be a core network element of the target operator accessed by the terminal. For example, the verification network element may be an authentication server function (authentication server function, AUSF) network element, an access and mobility management function (access and mobility management function, AMF) network element, or another core network element. For another example, the verification network element may alternatively be an access network element of the target operator accessed by the terminal, for example, an access network node accessed by the terminal. This is not limited in this application.

For example, the method includes: receiving a user identifier from the terminal; obtaining, from a storage network element, profile information corresponding to the user identifier, where the profile information includes a public key of the terminal; and authenticating the terminal based on the profile information.

In this application, the verification network element and the storage network element may be a same network element, or may be different network elements. This is not limited in this application. When the verification network element and the storage network element are the same network element, that the verification network element obtains, from the storage network element, the profile information corresponding to the user identifier may be understood as that the verification network element obtains, from a memory or a local storage, the profile information corresponding to the user identifier. When the verification network element and the storage network element are different network elements, that the verification network element obtains, from the storage network element, the profile information corresponding to the user identifier may be understood as that the verification network element sends the user identifier to the storage network element and receives, from the storage network element, the profile information corresponding to the user identifier.

In the foregoing technical solution, the verification network element may obtain, from the storage network element based on the user identifier from the terminal, the profile information corresponding to the user identifier, to complete authentication on the terminal based on the profile information. The verification network element may be the network element of the target operator accessed by the terminal. In other words, even if the verification network element is not a network element of a home operator, the verification network element may also obtain the profile information corresponding to the user identifier, to complete authentication on the terminal, without returning to the home operator for authentication. This helps simplify an authentication procedure, thereby reducing a delay. In addition, the profile information includes the public key of the terminal, and the terminal is authenticated based on the public key of the terminal. In comparison with using a symmetric key, security and flexibility are higher.

In some possible implementations of the first aspect, the authenticating the terminal based on the profile information includes: receiving, from the terminal, a first message and a digital signature of the terminal, where the digital signature of the terminal is obtained by signing a second message or a hash value of the second message based on a private key of the terminal, and the second message is a message exchanged between the terminal and the verification network element or the first message; and verifying the digital signature of the terminal based on the public key of the terminal.

The second message may be one or more of all messages exchanged between the terminal and the verification network element. This is not limited in this application.

The verification network element may verify the digital signature of the terminal based on the public key of the terminal in the profile information, where the digital signature of the terminal is obtained by signing the second message or the hash value of the second message based on the private key of the terminal. If the verification performed by the verification network element on the digital signature of the terminal succeeds, it is considered that the authentication performed by the verification network element on the terminal succeeds. Correspondingly, if the verification performed by the verification network element on the digital signature of the terminal fails, it is considered that the authentication performed by the verification network element on the terminal fails.

The digital signature of the terminal is verified based on the public key of the terminal, so that selection of the verification network element is flexible. In other words, the verification network element is not limited to a specific network element, and any network element can complete authentication on the terminal, with higher flexibility.

In some possible implementations of the first aspect, before verifying the digital signature of the terminal based on the public key of the terminal, the method further includes: obtaining an authentication credential of an issuer from the storage network element, where the issuer is an issuer of an authentication credential of the terminal; and verifying the authentication credential of the terminal based on the authentication credential of the issuer.

The issuer may be any one of an operator, an equipment vendor, a card vendor, or the like. The verification network element may obtain an authentication credential of any issuer, and verify the authentication credential of the terminal based on the authentication credential. In this way, verification flexibility is higher.

In some possible implementations of the first aspect, the method further includes: sending a third message and a digital signature of the verification network element to the terminal, where the digital signature of the verification network element is obtained by signing a fourth message or a hash value of the fourth message based on a private key of the verification network element, and the fourth message is a message exchanged between the terminal and the verification network element or the third message.

The fourth message may be one or more of all messages exchanged between the terminal and the verification network element. It may be understood that because time at which the verification network element receives the second message is different from time at which the verification network element sends the third message, messages exchanged between the terminal and the verification network element also change. Therefore, the second message and the fourth message may be different.

The verification network element sends the digital signature of the verification network element to the terminal, and the terminal verifies the digital signature of the verification network element based on a public key of the verification network element, and verifies the verification network element based on the public key of the verification network element, so that the terminal can verify a verification network element corresponding to any operator. In this way, the terminal can access different operators, with higher flexibility.

In addition, the verification network element may receive the first message and the digital signature of the terminal before sending the third message and the digital signature of the verification network element, or may receive the first message and the digital signature of the terminal after sending the third message and the digital signature of the verification network element. This is not limited in this application. For example, the verification network element may receive the first message and the digital signature of the terminal, verify the digital signature of the terminal based on the public key of the terminal, and send the third message and the digital signature of the verification network element to the terminal when the verification succeeds.

In some possible implementations of the first aspect, the method further includes: sending a certificate of the verification network element to the terminal.

The certificate of the verification network element includes, for example, the public key of the verification network element, an issuer, a validity period, a signature of the issuer, a version number, an identifier of the verification network element, and a certificate status query method (for example, revocation list information and an online certificate status protocol (online certificate status protocol, OCSP)). When the certificate of the verification network element is not preconfigured in the terminal, a certificate of the target operator may be preconfigured in the terminal. The certificate of the target operator includes a public key of the operator. The terminal may verify the certificate of the verification network element based on the certificate of the target operator, and further verify the digital signature of the verification network element based on the public key of the verification network element. The certificate of the verification network element is issued by the operator, that is, a signature of the certificate of the verification network element is generated by using a private key of the operator. The terminal may verify the signature of the certificate of the verification network element by using the public key in the certificate of the operator, and verify the digital signature of the verification network element by using the public key in the certificate of the verification network element. If both the verification processes succeed, it is considered that authentication performed by the terminal on the verification network element succeeds.

The verification network element sends the certificate of the verification network element to the terminal, and the certificate of the verification network element does not need to be preconfigured in the terminal. When there are a large quantity of verification network elements, certificates of all the verification network elements do not need to be preconfigured in the terminal. This helps save storage space on the terminal.

Optionally, the certificate of the verification network element and the digital signature of the verification network element may be carried in a same piece of signaling, or may be carried in different pieces of signaling. This is not limited in this application.

In some possible implementations of the first aspect, the profile information further includes at least one authentication credential and an algorithm corresponding to each of the at least one authentication credential; and the method further includes: determining a target authentication credential from the at least one authentication credential; and sending first indication information to the terminal, where the first indication information indicates the target authentication credential and/or an algorithm corresponding to the target authentication credential.

In this application, in a possible design, different authentication credentials may be understood as certificates in different format standards, for example, a certificate in X.509 format, a lightweight certificate, and a certificate in an operator-defined format. The algorithm corresponding to each authentication credential may include a signature algorithm used in a certificate, a signature verification algorithm that needs to be used, and the like. Each authentication credential may correspond to one or more algorithms. This is not limited in this application. In another possible design, different authentication credentials may be a plurality of certificates in a same format standard. For example, the terminal may have three authentication credentials, and formats of the three authentication credentials each are X.509 format.

The verification network element may indicate, to the terminal, the target authentication credential and/or the algorithm corresponding to the target authentication credential. For example, the target authentication credential and/or the algorithm corresponding to the target authentication credential may be determined based on a network status, a security level, and the like. In other words, the target authentication credential and/or the algorithm corresponding to the target authentication credential may be flexibly selected, instead of always using an authentication credential and/or an algorithm corresponding to the authentication credential, thereby achieving higher authentication flexibility.

According to a second aspect, this application provides an access authentication method. The method may be performed by an access authentication apparatus. The access authentication apparatus may be a terminal, may be a component (for example, a chip or a chip system) configured in the terminal, or may be a logical module or software that can implement all or some functions of the terminal. This is not limited in this application.

For example, the method includes: obtaining a user identifier; and sending the user identifier to a verification network element, where the verification network element is a network element of a target operator accessed by a terminal, the user identifier corresponds to profile information stored in a storage network element, the profile information includes a public key of the terminal, and the profile information is used to authenticate the terminal.

In the foregoing technical solution, the terminal may send the user identifier to the verification network element, and the user identifier corresponds to the profile information in the storage network element. In other words, after obtaining the user identifier, the verification network element may obtain the corresponding profile information based on the user identifier, to complete authentication on the terminal based on the profile information. The verification network element may be the network element of the target operator accessed by the terminal. In other words, even if the verification network element is not a network element of a home operator, the verification network element may also obtain the profile information corresponding to the user identifier, to complete authentication on the terminal, without returning to the home operator for authentication. This helps simplify an authentication procedure. In addition, the profile information includes the public key of the terminal, and the terminal is authenticated based on the public key of the terminal. In comparison with using a symmetric key, security and flexibility are higher.

In some possible implementations of the second aspect, the method further includes: receiving, from the verification network element, a third message and a digital signature of the verification network element, where the digital signature of the verification network element is obtained by signing a fourth message or a hash value of the fourth message based on a private key of the verification network element, and the fourth message is a message exchanged between the terminal and the verification network element or the third message; and verifying the digital signature of the verification network element based on a public key of the verification network element.

The fourth message may be one or more of all messages exchanged between the terminal and the verification network element. The public key of the verification network element may be preconfigured in the terminal, and the terminal verifies the digital signature of the verification network element based on the public key of the verification network element. If the verification performed by the terminal on the digital signature of the verification network element succeeds, it is considered that authentication performed by the terminal on the verification network element succeeds. Authentication is performed in a manner of performing signature verification by using the public key, and an authentication process is simple.

The terminal verifies the digital signature of the verification network element based on the public key of the verification network element, so that the terminal can verify a verification network element corresponding to any operator. In this way, the terminal can access different operators, with higher flexibility.

In some possible implementations of the second aspect, the method further includes: sending a first message and a digital signature of the terminal to the verification network element, where the digital signature of the terminal is obtained by signing a second message or a hash value of the second message based on a private key of the terminal, and the second message is a message exchanged between the terminal and the verification network element or the first message.

The second message may be one or more of all messages exchanged between the terminal and the verification network element. This is not limited in this application.

It may be understood that because time at which the verification network element receives the second message is different from time at which the verification network element sends the third message, messages exchanged between the terminal and the verification network element also change. Therefore, the second message and the fourth message may be different.

The terminal may send the digital signature of the terminal to the verification network element, so that the verification network element verifies the digital signature based on the public key of the terminal, to complete authentication on the terminal. Authentication is performed in a manner of performing signature verification by using the public key, and an authentication process is simple.

In addition, the terminal may receive the third message and the digital signature of the verification network element before sending the first message and the digital signature of the terminal to the verification network element, or may receive the third message and the digital signature of the verification network element after sending the first message and the digital signature of the terminal to the verification network element. This is not limited in this application. For example, the terminal may receive the third message and the digital signature of the verification network element, verify the digital signature of the verification network element based on the public key of the verification network element, and send the first message and the digital signature of the terminal to the verification network element when the verification succeeds.

The terminal sends the digital signature of the terminal, so that the verification network element verifies the digital signature of the terminal based on the public key of the terminal. The digital signature of the terminal is verified based on the public key of the terminal, so that selection of the verification network element is flexible. In other words, the verification network element is not limited to a specific network element, and any network element can complete authentication on the terminal, with higher flexibility.

In some possible implementations of the second aspect, the method further includes: receiving a certificate of the verification network element.

The certificate of the verification network element includes, for example, the public key of the verification network element, an issuer, a validity period, a signature of the issuer, a version number, an identifier of the verification network element, and a certificate status query method (for example, revocation list information and an OCSP). When the certificate of the verification network element is not preconfigured in the terminal, a certificate of the target operator may be preconfigured in the terminal. The certificate of the target operator includes a public key of the operator. The terminal may verify the certificate of the verification network element based on the certificate of the target operator, and further verify the digital signature of the verification network element based on the public key of the verification network element. The certificate of the verification network element is issued by the operator, that is, a signature of the certificate of the verification network element is generated by using a private key of the operator. The terminal may verify the signature of the certificate of the verification network element by using the public key in the certificate of the operator, and verify the digital signature of the verification network element by using the public key in the certificate of the verification network element. If both the verification processes succeed, it is considered that authentication performed by the terminal on the verification network element succeeds.

The terminal receives the certificate of the verification network element, and the certificate of the verification network element does not need to be preconfigured in the terminal. It can be imagined that when there are a large quantity of verification network elements, certificates of all the verification network elements do not need to be preconfigured in the terminal. This helps save storage space on the terminal.

Optionally, the certificate of the verification network element and the digital signature of the verification network element may be carried in a same piece of signaling, or may be carried in different pieces of signaling. This is not limited in this application.

In some possible implementations of the second aspect, before obtaining the user identifier, the method further includes: determining the target operator from a plurality of operators.

The terminal may determine the target operator from the plurality of operators. The plurality of operators may be operators to which a user subscribes, or may be operators to which the user does not subscribe to. This is not limited in this application. In other words, each operator has a chance to be selected, which helps improve fairness of competition between the operators.

In some possible implementations of the second aspect, the determining the target operator from the plurality of operators includes: determining the target operator from the plurality of operators based on one or more of a user location, quality of service (for example, signal strength) of each of the plurality of operators, fees of each of the plurality of operators, or security of each of the plurality of operators.

For example, the terminal may select, as the target operator, an operator that is in the user location, has strongest signal strength, lowest costs, and highest security from the plurality of operators, to provide better services for the user, so that user experience is improved.

In some possible implementations of the second aspect, the determining the target operator from the plurality of operators includes: determining the target operator from the plurality of operators in response to a user operation, where the user operation is an operation of selecting the target operator from the plurality of operators by a user.

The terminal may display, in a user interface, a plurality of operators for the user to select. The terminal determines the target operator in response to the operation of selecting the target operator from the plurality of operators by the user. This helps the user flexibly select a target operator that the user expects to access, thereby improving user experience.

With reference to the first aspect and the second aspect, in some possible implementations, the user identifier is carried in first signaling, the first signaling further includes a type of the user identifier and/or an identifier of a distributed storage system, and the identifier of the distributed storage system is used to identify a distributed storage system in which the profile information corresponding to the user identifier is located.

According to a third aspect, this application provides an access authentication method. The method may be performed by an access authentication apparatus. The access authentication apparatus may be a storage network element, may be a component (for example, a chip or a chip system) configured in the storage network element, or may be a logical module or software that can implement all or some functions of the storage network element. This is not limited in this application.

For example, the method includes: receiving a user identifier of a terminal from a verification network element, where the verification network element is a network element of a target operator accessed by the terminal; determining, based on the user identifier, profile information corresponding to the user identifier, where the profile information includes a public key of the terminal, and the profile information is used to authenticate the terminal; and sending the profile information to the verification network element.

It may be understood that, when the verification network element and the storage network element are a same network element, the verification network element (or referred to as the storage network element) directly receives the user identifier from the terminal, and then determines the corresponding profile information based on the user identifier, without sending the profile information.

In the foregoing technical solution, the storage network element may store a user identifier of a user and corresponding profile information, so that the verification network element queries for the corresponding profile information based on the user identifier, and completes authentication on the terminal based on the profile information. The verification network element may be the network element of the target operator accessed by the terminal. In other words, even if the verification network element is not a network element of a home operator, the verification network element may also obtain the profile information corresponding to the user identifier, to complete authentication on the terminal, without returning to the home operator for authentication. This helps simplify an authentication procedure. In addition, the profile information includes the public key of the terminal, and the terminal is authenticated based on the public key of the terminal. In comparison with using a symmetric key, security and flexibility are higher.

With reference to the first aspect to the third aspect, in some possible implementations, the user identifier includes a decentralized user root credential (decentralized root credential, DRC), a decentralized user identifier credential (decentralized identity credential, DIC), a decentralized self-control credential (decentralized self-control credential, DSCC), or a self-sovereign identity credential (self-sovereign identity credential, SCIC).

The DRC is preconfigured in a card by a card vendor or terminal vendor before delivery. The DIC is a plurality of ephemeral/derived identities (identities) derived from the DRC. The DSCC is generated by a user to control identity information. The DSCC is independent of the DRC or the DIC. The SCIC is derived from the DSCC. Each DRC, DIC, DSCC, or SCIC corresponds to profile information.

With reference to the first aspect to the third aspect, in some possible implementations, the user identifier includes a pseudonym identifier (pseudonym identifier, pseudo ID), there is a correspondence between the pseudonym identifier and a real identifier, and the storage network element stores the real identifier and corresponding profile information.

In other words, the terminal sends the pseudonym identifier, which helps improve security.

With reference to the first aspect to the third aspect, in some possible implementations, the user identifier includes a transaction address, and the transaction address indicates a location of the profile information corresponding to the user identifier in the distributed storage system.

With reference to the first aspect to the third aspect, in some possible implementations, the storage network element is a node in the distributed storage system, and the node stores at least one user identifier and profile information corresponding to each user identifier.

It may be understood that the distributed storage system may include one or more nodes, each node may store at least one user identifier and profile information corresponding to each user identifier, and the storage network element may be any one of the one or more nodes.

Optionally, the distributed storage system is a blockchain, a decentralized shared profile information storage system, or an interplanetary file system (interplanetary file system, IPFS).

According to a fourth aspect, this application provides an access authentication method. The method may be performed by an access authentication apparatus. The access authentication apparatus may be a verification network element, may be a component (for example, a chip or a chip system) configured in the verification network element, or may be a logical module or software that can implement all or some functions of the verification network element. This is not limited in this application.

In this application, the verification network element is a network element of a target operator accessed by a terminal. For example, the verification network element may be a core network element of the target operator accessed by the terminal. For example, the verification network element may be an AUSF network element, an AMF network element, or another core network element. For another example, the verification network element may alternatively be an access network element of the target operator accessed by the terminal, for example, an access network node accessed by the terminal. This is not limited in this application. The verification network element is not described below.

For example, the method includes: receiving a user identifier from the terminal and profile information corresponding to the user identifier, where the profile information includes a public key of the terminal; and authenticating the terminal based on the profile information.

The user identifier may be used to identify an authenticated terminal (or a universal integrated circuit card in the terminal).

In the foregoing technical solution, the verification network element may directly complete authentication on the terminal based on the profile information based on the obtained user identifier of the terminal and the profile information corresponding to the user identifier. The verification network element may be the network element of the target operator accessed by the terminal. In other words, even if the verification network element is not a network element of a home operator, the verification network element may also complete authentication on the terminal, without returning to the home operator for authentication. This helps simplify an authentication procedure.

In some possible implementations of the fourth aspect, the authenticating the terminal based on the profile information includes: receiving, from the terminal, a first message and a digital signature of the terminal, where the digital signature of the terminal is obtained by signing a second message or a hash value of the second message based on a private key of the terminal, and the second message is a message exchanged between the terminal and the verification network element or the first message; and verifying the digital signature of the terminal based on the public key of the terminal.

The second message may be one or more of all messages exchanged between the terminal and the verification network element. This is not limited in this application.

The verification network element may verify the digital signature of the terminal based on the public key of the terminal in the profile information, where the digital signature of the terminal is obtained by signing the second message or the hash value of the second message based on the private key of the terminal. If the verification performed by the verification network element on the digital signature of the terminal succeeds, it is considered that the authentication performed by the verification network element on the terminal succeeds. Correspondingly, if the verification performed by the verification network element on the digital signature of the terminal fails, it is considered that the authentication performed by the verification network element on the terminal fails.

In some possible implementations of the fourth aspect, the method further includes: sending a third message and a digital signature of the verification network element to the terminal, where the digital signature of the verification network element is obtained by signing a fourth message or a hash value of the fourth message based on a private key of the verification network element, and the fourth message is a message exchanged between the terminal and the verification network element or the third message.

The fourth message may be one or more of all messages exchanged between the terminal and the verification network element. It may be understood that because time at which the verification network element receives the second message is different from time at which the verification network element sends the third message, messages exchanged between the terminal and the verification network element also change. Therefore, the second message and the fourth message may be different.

In addition, the verification network element may receive the first message and the digital signature of the terminal before sending the third message and the digital signature of the verification network element, or may receive the first message and the digital signature of the terminal after sending the third message and the digital signature of the verification network element. This is not limited in this application. For example, the verification network element may receive the first message and the digital signature of the terminal, verify the digital signature of the terminal based on the public key of the terminal, and send the third message and the digital signature of the verification network element to the terminal when the verification succeeds.

In some possible implementations of the fourth aspect, the method further includes: sending a certificate of the verification network element to the terminal.

The certificate of the verification network element includes, for example, a public key of the verification network element, an issuer, a validity period, a signature of the issuer, a version number, an identifier of the verification network element, and a certificate status query method (for example, revocation list information and an OCSP). When the certificate of the verification network element is not preconfigured in the terminal, a certificate of the target operator may be preconfigured in the terminal. The certificate of the target operator includes a public key of the operator. The terminal may verify the certificate of the verification network element based on the certificate of the target operator, and further verify the digital signature of the verification network element based on the public key of the verification network element. The certificate of the verification network element is issued by the operator, that is, a signature of the certificate of the verification network element is generated by using a private key of the operator. The terminal may verify the signature of the certificate of the verification network element by using the public key in the certificate of the operator, and verify the digital signature of the verification network element by using the public key in the certificate of the verification network element. If both the verification processes succeed, it is considered that authentication performed by the terminal on the verification network element succeeds.

Optionally, the certificate of the verification network element and the digital signature of the verification network element may be carried in a same piece of signaling, or may be carried in different pieces of signaling. This is not limited in this application.

In some possible implementations of the fourth aspect, the method further includes: obtaining, from a storage network element based on the user identifier, a hash value of the profile information corresponding to the user identifier; and verifying the profile information based on the hash value.

According to a fifth aspect, this application provides an access authentication method. The method may be performed by an access authentication apparatus. The access authentication apparatus may be a terminal, may be a component (for example, a chip or a chip system) configured in the terminal, or may be a logical module or software that can implement all or some functions of the terminal. This is not limited in this application.

For example, the method includes: obtaining a user identifier of the terminal and profile information corresponding to the user identifier, where the profile information includes a public key of the terminal; and sending, to a verification network element, the user identifier and the profile information corresponding to the user identifier, where the verification network element is a network element of a target operator accessed by the terminal, and the profile information is used to authenticate the terminal.

In the foregoing technical solution, the terminal may send, to the verification network element, the user identifier and the profile information corresponding to the user identifier, so that the verification network element completes authentication on the terminal based on the profile information. The verification network element may be the network element of the target operator accessed by the terminal. In other words, even if the verification network element is not a network element of a home operator, the verification network element may also obtain the profile information corresponding to the user identifier, to complete authentication on the terminal, without returning to the home operator for authentication. This helps simplify an authentication procedure.

In some possible implementations of the fifth aspect, the method further includes: receiving, from the verification network element, a third message and a digital signature of the verification network element, where the digital signature of the verification network element is obtained by signing a fourth message or a hash value of the fourth message based on a private key of the verification network element, and the fourth message is a message exchanged between the terminal and the verification network element or the third message; and verifying the digital signature of the verification network element based on a public key of the verification network element.

The fourth message may be one or more of all messages exchanged between the terminal and the verification network element. The public key of the verification network element may be preconfigured in the terminal, and the terminal verifies the digital signature of the verification network element based on the public key of the verification network element. If the verification performed by the terminal on the digital signature of the verification network element succeeds, it is considered that authentication performed by the terminal on the verification network element succeeds. Authentication is performed in a manner of performing signature verification by using the public key, and an authentication process is simple.

In some possible implementations of the fifth aspect, the method further includes: sending a first message and a digital signature of the terminal to the verification network element, where the digital signature of the terminal is obtained by signing a second message or a hash value of the second message based on a private key of the terminal, and the second message is a message exchanged between the terminal and the verification network element or the first message.

The second message may be one or more of all messages exchanged between the terminal and the verification network element. This is not limited in this application.

It may be understood that because time at which the verification network element receives the second message is different from time at which the verification network element sends the third message, messages exchanged between the terminal and the verification network element also change. Therefore, the second message and the fourth message may be different.

The terminal may send the digital signature of the terminal to the verification network element, so that the verification network element verifies the digital signature based on the public key of the terminal, to complete authentication on the terminal. Authentication is performed in a manner of performing signature verification by using the public key, and an authentication process is simple.

In addition, the terminal may receive the third message and the digital signature of the verification network element before sending the first message and the digital signature of the terminal to the verification network element, or may receive the third message and the digital signature of the verification network element after sending the first message and the digital signature of the terminal to the verification network element. This is not limited in this application. For example, the terminal may receive the third message and the digital signature of the verification network element, verify the digital signature of the verification network element based on the public key of the verification network element, and send the first message and the digital signature of the terminal to the verification network element when the verification succeeds.

In some possible implementations of the fifth aspect, the method further includes: receiving a certificate of the verification network element.

In some possible implementations of the fifth aspect, before obtaining the user identifier and the profile information corresponding to the user identifier, the method further includes: determining the target operator from a plurality of operators.

The terminal may determine the target operator from the plurality of operators. The plurality of operators may be operators to which a user subscribes, or may be operators to which the user does not subscribe to. This is not limited in this application. In other words, each operator has a chance to be selected, which helps improve fairness of competition between the operators.

In some possible implementations of the fifth aspect, the determining the target operator from the plurality of operators includes: determining the target operator from the plurality of operators based on one or more of a user location, quality of service (for example, signal strength) of each of the plurality of operators, fees of each of the plurality of operators, or security of each of the plurality of operators.

For example, the terminal may select, as the target operator, an operator that is in the user location, has strongest signal strength, lowest costs, and highest security from the plurality of operators, to provide better services for the user, so that user experience is improved.

In some possible implementations of the fifth aspect, the determining the target operator from the plurality of operators includes: determining the target operator from the plurality of operators in response to a user operation, where the user operation is an operation of selecting the target operator from the plurality of operators by a user.

The terminal may display, in a user interface, a plurality of operators for the user to select. The terminal determines the target operator in response to the operation of selecting the target operator from the plurality of operators by the user. This helps the user flexibly select a target operator that the user expects to access, thereby improving user experience.

With reference to the fourth aspect and the fifth aspect, in some possible implementations, the user identifier is carried in first signaling, the first signaling further includes a type of the user identifier and/or an identifier of a distributed storage system, and the identifier of the distributed storage system is used to identify a distributed storage system in which the profile information corresponding to the user identifier is located.

According to a sixth aspect, this application provides an access authentication method. The method may be performed by an access authentication apparatus. The access authentication apparatus may be a storage network element, may be a component (for example, a chip or a chip system) configured in the storage network element, or may be a logical module or software that can implement all or some functions of the storage network element. This is not limited in this application.

For example, the method includes: receiving a user identifier of a terminal from a verification network element, where the verification network element is a network element of a target operator accessed by the terminal; determining, based on the user identifier, a hash value of profile information corresponding to the user identifier, where the profile information includes a public key of the terminal; and sending the hash value of the profile information to the verification network element.

It may be understood that, when the verification network element and the storage network element are a same network element, the verification network element (or referred to as the storage network element) directly receives the user identifier from the terminal, and then determines the hash value of the corresponding profile information based on the user identifier, without sending/receiving the hash value of the profile information.

In the foregoing technical solution, the storage network element may store a user identifier of a user and a hash value of corresponding profile information, so that the verification network element queries for the hash value of the corresponding profile information based on a user identifier, and further verifies the profile information obtained from the terminal, thereby improving accuracy of the profile information.

With reference to the fourth aspect to the sixth aspect, in some possible implementations, the user identifier includes a DRC, a DIC, a DSCC, or an SCIC.

With reference to the fourth aspect to the sixth aspect, in some possible implementations, the user identifier includes a pseudonym identifier, there is a correspondence between the pseudonym identifier and a real identifier, and the storage network element stores the real identifier and a hash value of corresponding profile information.

In other words, the terminal sends the pseudonym identifier, which helps improve security.

With reference to the fourth aspect to the sixth aspect, in some possible implementations, the user identifier includes a transaction address, and the transaction address indicates a location of the hash value of the profile information corresponding to the user identifier in the distributed storage system.

With reference to the fourth aspect to the sixth aspect, in some possible implementations, the storage network element is a node in the distributed storage system, and the node stores at least one user identifier and a hash value of profile information corresponding to each user identifier.

Optionally, the distributed storage system is a blockchain, a decentralized shared profile information storage system, or an interplanetary file system.

According to a seventh aspect, this application provides an access authentication apparatus, to implement the method according to any one of the first aspect to the sixth aspect and the possible implementations of the first aspect to the sixth aspect. The apparatus includes a corresponding module configured to perform the method. The module included in the apparatus may be implemented by software and/or hardware.

According to an eighth aspect, this application provides an access authentication apparatus, where the apparatus includes a processor, and the processor may be configured to execute a computer program in a memory, to implement the method according to any one of the first aspect to the sixth aspect and the possible implementations of the first aspect to the sixth aspect.

Optionally, the apparatus further includes a communication interface, and the processor is coupled to the communication interface. The communication interface is configured to receive a signal from a communication apparatus other than the apparatus and transmit the signal to the processor, or send a signal from the processor to a communication apparatus other than the apparatus. For example, the communication interface may be a transceiver, a circuit, a bus, a module, or a communication interface of another type.

Optionally, the apparatus further includes the memory, and the processor is coupled to the memory. The memory is configured to store program instructions and data. The memory is coupled to the processor, and when executing the instructions stored in the memory, the processor may implement the method described in the foregoing aspects.

According to a ninth aspect, this application provides an access authentication apparatus, including a processor and a communication interface. The communication interface is configured to: receive a signal from a communication apparatus other than the communication apparatus and transmit the signal to the processor, or send a signal from the processor to a communication apparatus other than the communication apparatus. The processor implements the method according to any one of the first aspect to the sixth aspect and the possible implementations of the first aspect to the sixth aspect by using a logic circuit or by executing code instructions. For example, the communication interface may be a transceiver, a circuit, a bus, a module, a pin, or a communication interface of another type.

Optionally, the apparatus further includes a memory, configured to store instructions and/or data. The memory may be coupled to the processor, and when executing the instruction stored in the memory, the processor implements the method according to any one of the first aspect to the sixth aspect and the possible implementations of the first aspect to the sixth aspect.

According to a tenth aspect, this application provides an access authentication apparatus, including a processor and a memory. The memory is configured to store instructions and data. When executing the instructions stored in the memory, the processor may implement the method according to any one of the first aspect to the sixth aspect and the possible implementations of the first aspect to the sixth aspect.

Optionally, the apparatus further includes a communication interface. The communication interface is configured for the apparatus to communicate with another communication apparatus. For example, the communication interface may be a transceiver, a circuit, a bus, a module, a pin, or a communication interface of another type.

According to an eleventh aspect, this application provides a computer-readable storage medium. The computer-readable storage medium stores a computer program or instructions. When the computer program or the instructions are executed, the method according to any one of the first aspect to the sixth aspect and the possible implementations of the first aspect to the sixth aspect is implemented.

According to a twelfth aspect, this application provides a computer program product. The computer program product includes instructions. When the instructions are run, the method according to any one of the first aspect to the sixth aspect and the possible implementations of the first aspect to the sixth aspect is implemented.

According to a thirteenth aspect, this application provides a chip system. The chip system includes at least one processor, configured to support implementation of a function in any one of the first aspect to the sixth aspect and the possible implementations of the first aspect to the sixth aspect, for example, receiving or processing data in the foregoing method.

In a possible design, the chip system further includes a memory, the memory is configured to store program instructions and data, and the memory is located inside or outside the processor.

The chip system may include a chip, or may include a chip and another discrete device.

According to a fourteenth aspect, this application provides a communication system. The communication system includes a verification network element and a storage network element. The verification network element is configured to implement the method according to any one of the first aspect and the possible implementations of the first aspect, and the storage network element is configured to implement the method according to any one of the third aspect and the possible implementations of the third aspect.

Optionally, the communication system further includes a terminal. The terminal is configured to implement the method according to any one of the second aspect and the possible implementations of the second aspect.

According to a fifteenth aspect, this application provides a communication system. The communication system includes a verification network element and a storage network element. The verification network element is configured to implement the method according to any one of the fourth aspect and the possible implementations of the fourth aspect, and the storage network element is configured to implement the method according to any one of the sixth aspect and the possible implementations of the sixth aspect.

Optionally, the communication system further includes a terminal. The terminal is configured to implement the method according to any one of the fifth aspect and the possible implementations of the fifth aspect.

It should be understood that technical solutions in the fourth aspect to the fifteenth aspect of this application correspond to the technical solutions in the first aspect to the third aspect of this application, and beneficial effect achieved by the aspects and corresponding feasible implementations are similar. Details are not described.

### BRIEF DESCRIPTION OF DRAWINGS

FIG. 1a and FIG. 1b are diagrams of possible access authentication procedures;
FIG. 2A is a diagram of an architecture of a communication system applicable to an access authentication method according to this application;
FIG. 2B is a diagram of a blockchain according to an embodiment of this application;
FIG. 3 is a schematic flowchart of an access authentication method according to an embodiment of this application;
FIG. 4 is a diagram of subscription manners of a plurality of operators according to an embodiment of this application;
FIG. 5 is a diagram of a format of first signaling according to an embodiment of this application;
FIG. 6 is a diagram of an access authentication procedure according to an embodiment of this application;
FIG. 7 is another diagram of an access authentication procedure according to an embodiment of this application;
FIG. 8 is still another diagram of an access authentication procedure according to an embodiment of this application;
FIG. 9 is a schematic flowchart of another access authentication method according to an embodiment of this application;
FIG. 10 is yet another diagram of an access authentication procedure according to an embodiment of this application;
FIG. 11 is a block diagram of an access authentication apparatus according to an embodiment of this application; and
FIG. 12 is another block diagram of an access authentication apparatus according to an embodiment of this application.

### DESCRIPTION OF EMBODIMENTS

The following describes technical solutions of this application with reference to accompanying drawings.

Before the methods provided in embodiments of this application are described, the following descriptions are first provided.

First, in this application, indicating includes explicitly indicating (also referred to as directly indicating) and implicitly indicating (also referred to as indirectly indicating). Explicitly indicating information A means including the information A. Implicitly indicating information A means indicating the information A by using a correspondence between the information A and information B and by directly indicating the information B, where the correspondence between the information A and the information B may be predefined, prestored, pre-sintered, or preconfigured. Alternatively, indicating information A may be performed by using information B and a preset rule.

Second, in this application, that information C is used to determine information D includes that the information D is determined based only on the information C, and also includes that the information D is determined based on the information C and other information. In addition, that the information C is used to determine the information D may further include an indirect determining case, for example, a case in which the information D is determined based on information E, and the information E is determined based on the information C.

Third, in this application, "at least one" indicates one or more, "a plurality of" indicates two or more. "And/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects, but does not exclude an "and" relationship between the associated objects. A specific indicated meaning may be understood with reference to the context. "At least one of the following items (pieces)" or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

Fourth, in this application, prefix words such as "first" and "second" are merely used for distinguishing and describing different things belonging to a same name category, and are not intended to limit a sequence, sizes, or a quantity of things. For example, a "first message" and a "second message" may be different messages, or may be a same message. This is not limited in this application.

Fifth, "sending" and "receiving" in this application indicate a signal transmission direction. For example, "sending information to a verification network element" may be understood as that a destination end of the information is the verification network element, and may include direct sending through an air interface, or indirect sending via another unit or module through an air interface. "Receiving information from a terminal" may be understood as that a source end of the information is the terminal, and may include direct receiving from the terminal through an air interface, or may include indirect receiving from the terminal through an air interface from another unit or module. "Sending" may alternatively be understood as "outputting" of a chip interface, and "receiving" may alternatively be understood as "inputting" of the chip interface.

In other words, sending and receiving may be performed between devices, for example, between a terminal and a verification network element; or sending or receiving may be performed inside a device, for example, between components, modules, chips, software modules, or hardware modules inside the device through a bus, a cable, or an interface.

Sixth, in this application, both "when" and "if" mean that an apparatus performs corresponding processing in an objective situation, are not intended to limit time, do not require the apparatus to necessarily have a determining action during implementation, and do not mean another limitation.

Seventh, in this application, a word such as "example", "for example", "such as", or "like" indicates an example, an illustration, or a description. Any embodiment or design scheme described as "example", "for example", "such as", or "like" in this application should not be explained as being more preferred or having more advantages than another embodiment or design scheme. Specifically, use of the word "example", "for example", "such as", or "like" is intended to present a relative concept in a specific manner.

Currently, a user (or a user card) needs to be bound with an operator, and multi-operator one-card cannot be implemented. In other words, each operator independently manages user information, and even operators of a same type in different regions also independently manage user information. Operators need to maintain massive user information, which poses a risk of leakage caused by single-point attacks. In addition, network access authentication is generally controlled by a home operator, where the home operator is an operator in a subscription location of a user.

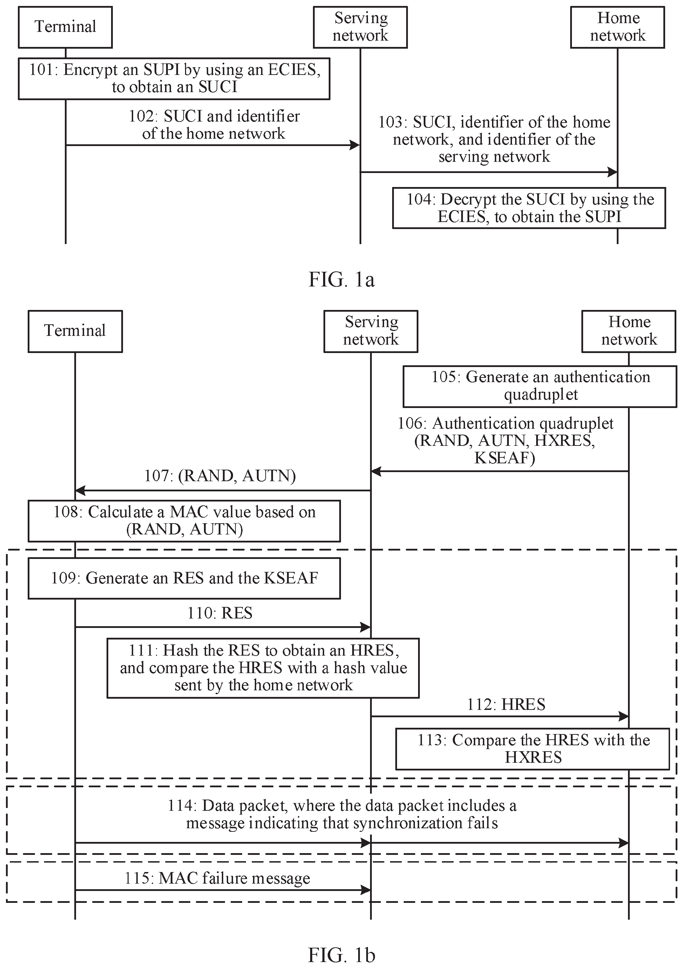

If a terminal is located in a region outside a home location, the terminal needs to be subjected to access authentication performed by the home operator when accessing a network. For example, a user subscribes to a mobile operator in a region A, but the user is located in a region B. Therefore, the user accesses a mobile operator in the region B. A specific access authentication procedure includes: When accessing a network, a terminal needs to send a user identifier to a serving network (a network in the region B), the serving network sends the user identifier to a home network, and the home network completes access authentication on the terminal. The following describes the existing access authentication procedure in detail with reference to FIG. 1a and FIG. 1b.

FIG. 1a and FIG. 1b are diagrams of possible access authentication procedures. FIG. 1a shows a registration phase, and FIG. 1b shows an authentication phase.

Step 101: A terminal encrypts a subscription permanent identifier (subscription permanent identifier, SUPI) by using an integrated encryption mechanism (elliptic curve integrated encryption scheme, ECIES), to obtain a subscription concealed identifier (subscription concealed identifier, SUCI).

The terminal encrypts the SUPI by using the ECIES, so that a security risk in plaintext transmission is eliminated, and security is improved.

Step 102: The terminal sends the SUCI and an identifier of a home network (home network, HN) to a serving network (serving network, SN), and correspondingly, the serving network receives the SUCI and the identifier of the home network from the terminal.

The serving network is a network accessed by the terminal, and the home network is a network in a subscription location of a user. For example, if a user subscribes to a mobile operator in Beijing, the mobile operator in Beijing is a home network. After the user arrives in Guangzhou, if the user accesses a mobile operator in Guangzhou, the mobile operator in Guangzhou is a serving network.

The identifier of the home network is used to identify the home network. After encrypting the SUPI to obtain the SUCI, the terminal sends the SUCI and the identifier of the home network to the serving network, and the serving network may determine the corresponding home network based on the identifier of the home network.

Step 103: The serving network sends the SUCI, the identifier of the home network, and an identifier of the serving network to the home network, and correspondingly, the home network receives the SUCI, the identifier of the home network, and the identifier of the serving network from the serving network.

Step 104: The home network decrypts the SUCI by using the ECIES to obtain the SUPI.

After receiving the SUCI, the home network decrypts the SUCI by using the ECIES to obtain the SUPI. Because the home network stores information needed for authenticating the terminal, the home network may determine, based on the SUPI, the information needed for authentication, for example, a used authentication credential.

It may be understood that an authentication procedure shown in FIG. 1b is described by using an authentication and key agreement (authentication and key agreement, AKA) protocol as an example. A specific principle of AKA-based authentication is as follows: The home network and the terminal hold a same key, where the key corresponds to the SUPI. In an authentication process, the home network and the terminal perform calculation based on a challenge value and the key. If calculation results are the same, it is proved that the home network and the terminal hold the same key, and authentication succeeds.

With reference to FIG. 1b, the following describes in detail a process of AKA-based terminal authentication.

Step 105: The home network generates an authentication quadruplet.

The authentication quadruplet is (random number (random, RAND), authentication token (authentication token, AUTN), hash value of expected response value (hash expected response, HXRES), security anchor network element key (key security anchor function, KSEAF)). For a specific calculation process, refer to a known technology. Details are not described herein again.

The RAND is a 128-bit random number. The AUTN is an authentication token, and the authentication token includes an exclusive OR value (denoted as C) of an AK and a home network sequence number (home network sequence, SQNHN) and a message authentication code (message authentication code, MAC) value. The HXRES is a hash value of the RAND and the expected response value (expected response, XRES). The KSEAF is an anchor key established with the serving network.

Step 106: The home network sends the authentication quadruplet (RAND, AUTN, HXRES, KSEAF) to the serving network, and correspondingly, the serving network receives the authentication quadruplet (RAND, AUTN, HXRES, KSEAF).

Step 107: The serving network sends (RAND, AUTN) to the terminal, and correspondingly, the terminal receives (RAND, AUTN).

After receiving the authentication quadruplet, the serving network sends (RAND, AUTN) in the authentication quadruplet to the terminal.

Step 108: The terminal calculates a MAC value based on (RAND, AUTN).

For example, the terminal splits the AUTN into C and MAC, calculates an AK (herein, a function of the AK is to hide a sequence number (sequence, SQN) in a message) by using the shared key k and the RAND, performs an exclusive OR operation with C to obtain an SQNHN, finally calculates a MAC value based on the SQNHN, and compares the MAC value with the received MAC value. The MAC value is calculated by using a sequence number on a home network side instead of a sequence number on a terminal side.

If the MAC values are the same and the sequence number on the terminal side is less than the sequence number on the home network side, authentication on the HN succeeds, and the terminal performs step 109 to step 113. If the MAC values are the same but the sequence number on the terminal side is greater than the sequence number on the home network side, the terminal performs step 114. If the MAC values are different, the authentication fails, and the terminal performs step 115.

The terminal considers that the sequence numbers are not synchronized and performs resynchronization on the terminal side, which is a major cause of a link attack.

Step 109: The terminal generates a response value (response, RES) and a KSEAF.

Step 110: The terminal sends the RES to the serving network, and correspondingly, the serving network receives the RES.

Step 111: The serving network hashes the RES to obtain a hash of the response value (hash response, HRES), and compares the hash with the hash value sent by the home network.

If the hash and the hash value are the same, step 112 is performed; or if the hash and the hash value are different, the authentication fails.

Step 112: The serving network sends the HRES to the home network, and correspondingly, the home network receives the HRES.

Step 113: The home network compares the HRES with the HXRES.

If the HRES and the HXRES are the same, the home network returns the SUPI to the serving network and completes authentication on the terminal. If the HRES and the HXRES are different, the authentication on the terminal fails.

Step 114: The terminal sends a data packet to the home network via the serving network. The data packet includes a message indicating that synchronization fails.

Step 115: The terminal sends a MAC failure message to the serving network, and correspondingly, the serving network receives the MAC failure message.

It can be learned from FIG. 1a and FIG. 1b that, in the authentication process, because the home network stores the information needed for authentication, but the serving network does not have the information, the serving network cannot perform access authentication on the terminal, and authentication needs to be completed by the home network. The entire authentication process is complex. In addition, operators need to maintain massive user information, which poses a risk of leakage caused by single-point attacks, resulting in low security. Moreover, the home network and the terminal perform verification based on a symmetric key. If one party is attacked, the key is leaked, and security is low. For example, if a home network side is attacked, the key is leaked, and security is low.

To resolve the problem, this application provides an access authentication method. A network element (denoted as a verification network element) of a target operator currently accessed by a terminal may obtain, from a storage network element based on a user identifier from the terminal, profile information corresponding to the user identifier, to complete authentication on the terminal based on the profile information. In other words, even if the verification network element is not a network element of a home operator, the verification network element may also obtain the profile information corresponding to the user identifier, to complete authentication on the terminal, without returning to the home operator for authentication. This helps simplify an authentication procedure. The profile information includes a public key of the terminal, and the terminal is authenticated based on the public key of the terminal. In comparison with using a symmetric key, security and flexibility are higher.

The access authentication method provided in embodiments of this application may be applied to a 4th generation (4th generation, 4G) communication system, for example, a long term evolution (long term evolution, LTE) communication system, may be applied to a 5th generation (5th generation, 5G) communication system, for example, a 5G new radio (new radio, NR) communication system, or may be applied to various communication systems evolved after 5G, for example, a 6th generation (6th generation, 6G) communication system. The method provided in embodiments of this application may be further applied to a Bluetooth system, a wireless fidelity (wireless fidelity, Wi-Fi) system, a long range (long range, LoRa) internet of things system, or an internet of vehicles system. The method provided in embodiments of this application may be further applied to a satellite communication system. The satellite communication system may be integrated with the foregoing communication system.

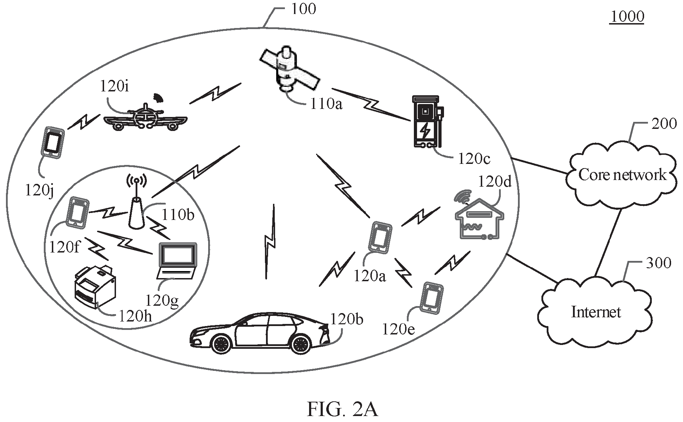

For ease of understanding embodiments of this application, an application scenario to which this application is applicable is described by using an architecture of a communication system shown in FIG. 2A as an example. FIG. 2A is a diagram of a possible and non-limiting system. As shown in FIG. 2A, the communication system 1000 includes a radio access network (radio access network, RAN) 100 and a core network (core network, CN) 200. The RAN 100 includes at least one network device (for example, 110a and 110b in FIG. 2A, which are collectively referred to as 110) and at least one terminal (for example, 120a to 120j in FIG. 2A, which are collectively referred to as 120). The RAN 100 may further include another RAN node, for example, a wireless relay device and/or a wireless backhaul device (not shown in FIG. 2A). The terminal 120 is connected to the network device 110 in a wireless manner. The network device 110 is connected to the core network 200 in a wireless or wired manner. A core network device in the core network 200 and the network device 110 in the RAN 100 may be different physical devices, or may be a same physical device that integrates a logical function of the core network and a logical function of the radio access network.

The RAN 100 may be a cellular system related to a 3rd generation partnership project (3rd generation partnership project, 3GPP), for example, a 4G mobile communication system, a 5G mobile communication system, or a system evolving after 5G (for example, a 6G mobile communication system). The RAN 100 may alternatively be an open radio access network (open RAN, O-RAN or ORAN), a cloud radio access network (cloud radio access network, CRAN), or a Wi-Fi system. The RAN 100 may alternatively be a communication system that integrates two or more of the foregoing systems.

In this application, the terminal may be, for example, the terminal 120 in FIG. 2A; the verification network element may be, for example, a network element in the core network 200 shown in FIG. 2A, or may be the network device 110 shown in FIG. 2A; and the storage network element may be, for example, a network element in the core network 200 shown in FIG. 2A, or may be the network device 110 shown in FIG. 2A. Specific types of the terminal, the verification network element, and the storage network element are not limited in this application. It may be understood that, FIG. 2A shows only a possible architecture of the communication system to which embodiments of this application may be applied. In another possible scenario, the architecture of the communication system may alternatively include another device.

The network device 110 is a node in the radio access network (radio access network, RAN), and may also be referred to as an access network device or a RAN node (or device). The network device 110 is configured to assist the terminal in implementing radio access. A plurality of network devices 110 in the communication system 1000 may be nodes of a same type, or may be nodes of different types. In some scenarios, roles of the network device 110 and the terminal 120 are relative. For example, a network element 120i in FIG. 2A may be a helicopter or an uncrewed aerial vehicle, and may be configured as a mobile base station. For a terminal 120j that accesses the RAN 100 via the network element 120i, the network element 120i is a base station. However, for a base station 110a, the network element 120i is a terminal. The network device 110 and the terminal 120 are sometimes referred to as communication apparatuses. For example, network elements 110a and 110b in FIG. 2A may be understood as communication apparatuses having a base station function, and network elements 120a to 120j may be understood as communication apparatuses having a terminal function.

In a possible scenario, the network device may be a base station (base station), an evolved NodeB (evolved NodeB, eNodeB), a transmitting and receiving point (transmitting and receiving point, TRP), a transmitting point (transmitting point, TP), a next generation NodeB (next generation NodeB, gNB), a next generation base station in a 6G mobile communication system, a base station in a future mobile communication system, a satellite, an access point (access point, AP) in a Wi-Fi system, an integrated access and backhaul (integrated access and backhaul, IAB) node, a network device that is in a non-terrestrial network (non-terrestrial network, NTN) communication system of a mobile switching center and that may be deployed on a high-altitude platform or a satellite, or the like. The network device may be a macro base station (for example, 110a in FIG. 2A), a micro base station or an indoor station (for example, 110b in FIG. 2A), a relay node or a donor node, or a radio controller in a CRAN scenario. The network device may alternatively be a device that functions as a base station in device-to-device (device-to-device, D2D) communication, internet of vehicles communication, uncrewed aerial vehicle communication, or machine communication. Optionally, the network device may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of network devices collaborate to assist a terminal in implementing radio access, and different network devices respectively implement a part of functions of the base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including the CU node and the DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

A form of the network device is not limited in embodiments of this application. An apparatus configured to implement a function of the network device may be a network device, or may be an apparatus, for example, a chip system, that can support the network device in implementing the function. The apparatus can be installed in the network device, or can match the network device for use.

The terminal may also be referred to as a terminal device, user equipment (user equipment, UE), a mobile station (mobile station, MS), a mobile terminal (mobile terminal, MT), or the like, may be a device configured to provide voice or data connectivity for a user, or may be an internet of things device. For example, the terminal device includes a handheld device, a vehicle-mounted device, or the like that has a wireless connection function. Currently, the terminal may be, for example, a mobile phone, a tablet computer, a notebook computer, a palmtop computer, a mobile internet device (mobile internet device, MID), a wearable device (for example, a smartwatch, a smart band, a pedometer, or smart glasses), a vehicle-mounted device (for example, a car, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, a customer-premises equipment (customer-premises equipment, CPE), a wireless terminal in industrial control, a smart home device (for example, a refrigerator, a television, an air conditioner, or an electric meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be a vehicle apparatus, for example, an entire vehicle apparatus, a vehicle-mounted module, a vehicle-mounted chip, an on-board unit (on-board unit, OBU), or an internet of things terminal box (telematics box, T-BOX). The terminal device may alternatively be another device having a terminal function. For example, the terminal device may be a device that has a terminal function in D2D communication.

A device form of the terminal is not limited in embodiments of this application. An apparatus configured to implement a function of the terminal may be a terminal, or may be an apparatus, for example, a chip system, that can support the terminal in implementing the function. The apparatus can be installed in the terminal, or can match the terminal for use. In embodiments of this application, the chip system may include a chip, or may include the chip and another discrete device.

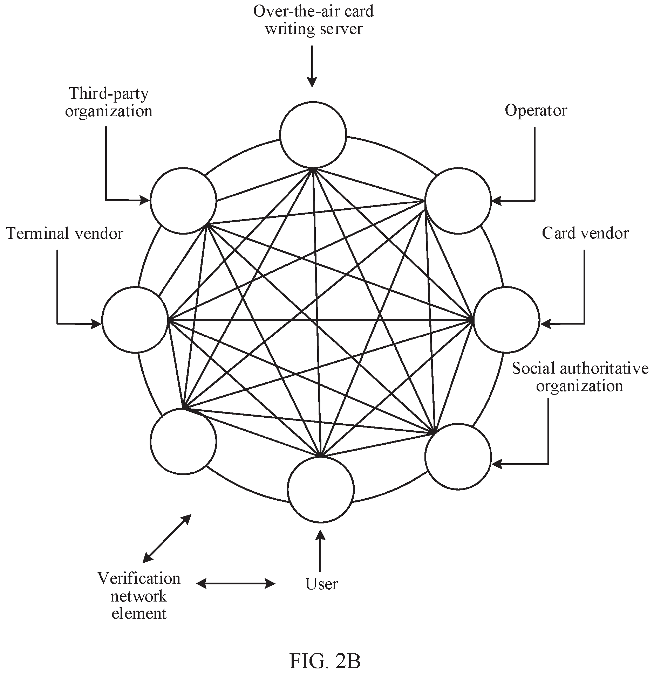

Before the access authentication method provided in this application is described in detail, the following first describes a blockchain in detail with reference to FIG. 2B.

FIG. 2B is a diagram of a blockchain according to an embodiment of this application. It should be understood that, in this application, the blockchain is an example of a distributed storage system, and should not constitute any limitation on this application. For example, a node in a distributed storage system of another type may also store a user identifier and corresponding profile information.

As shown in FIG. 2B, a card vendor (for example, a universal integrated circuit card (universal integrated circuit card, UICC), which may be referred to as a blockchain-UICC (blockchain UICC, B-UICC) in this application), a terminal vendor, an operator, a social authoritative organization, a third-party organization, and the like jointly construct (or maintain) the blockchain, and release, on the blockchain, respective identifiers and profile information corresponding to the identifiers. In other words, at least one node on the blockchain may share an identifier and corresponding profile information. Therefore, in this application, when a terminal accesses a network in a remote location (a non-home location), the accessed network authenticates the terminal, without returning to a home network for authenticating the terminal. In addition, in FIG. 2B, an over-the-air card writing server may be configured to write related information of a subscription between a user and an operator into profile information. The over-the-air card writing server may be deployed together with the operator or the card vendor.

It should be noted that, in this application, the identifier may be specifically a self-sovereign identity (self-sovereign identity, scID). The following describes several types of scIDs in detail.

For an organization (for example, a card vendor, a terminal device vendor, an operator, a social authoritative organization, or a third-party organization), an scID includes a decentralized user root credential (decentralized root credential, DRC) or a decentralized user identifier credential (decentralized identity credential, DIC). The DRC is a root of trust of the organization, and the DIC is derived from the DRC. For example, China Mobile serves as a DRC, Beijing Mobile serves as a DIC 1, and Shanghai Mobile serves as a DIC 2. Each DRC or DIC corresponds to profile information (profile). An authentication credential in a DIC profile is signed and endorsed by using a private key corresponding to the DRC, and the profile information includes information about a service that can be provided.

For a user (for example, a terminal or a B-UICC), an scID may include a DRC, a DIC, a decentralized self-control credential (decentralized self-control credential, DSCC), or a self-sovereign identity credential (self-sovereign identity credential, SCIC). The DRC is preconfigured in a card by a card vendor/a terminal device vendor before delivery, and credential information (or referred to as an authentication credential) in profile information corresponding to the DRC is endorsed by the card vendor/the terminal vendor, that is, signed by using a private key of the card vendor/the terminal vendor. The DIC is one or more temporary/derived identities (identities) derived from the DRC. Credential information in profile information corresponding to the DIC may be endorsed by using the DRC, for example, signed by using a private key in the DRC, or may be endorsed by an operator, for example, signed by using a private key of the operator. The DSCC is generated by a user to control identity information. The DSCC is independent of the DRC or the DIC. Credential information in profile information corresponding to the DSCC is self-signed by a terminal/a card, or may be endorsed by a subscription operator after subscription, for example, signed by using a private key of the operator. The SCIC is derived from the DSCC. Credential information in profile information corresponding to the SCIC may be endorsed by using the DSCC, for example, signed by using a private key in the DSCC, or may be endorsed by an operator, that is, signed by using a private key of the operator. Each DRC, DIC, DSCC, or SCIC corresponds to profile information. The profile information includes information needed for authenticating the terminal. For example, the profile information includes but is not limited to information such as a public key of the terminal, a subscription party, and a validity period. The profile information may further include at least one authentication credential that may be used to authenticate the terminal and/or an algorithm corresponding to each authentication credential. It can be learned from FIG. 2B that the verification network element may obtain, from the blockchain, the information needed for authenticating the terminal.

The following describes in detail the access authentication method provided in this application with reference to the accompanying drawings.

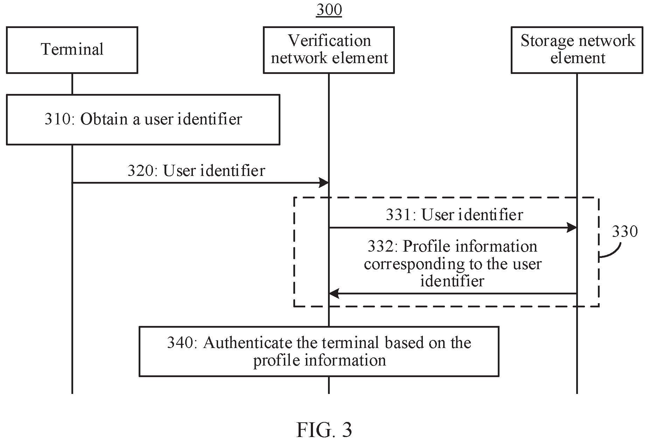

FIG. 3 is a schematic flowchart of an access authentication method 300 according to an embodiment of this application. In FIG. 3, the method is merely described from a perspective of interaction between a terminal, a verification network element, and a storage network element, but this should not constitute any limitation on this application. The terminal in FIG. 3 may be replaced with a component (for example, a chip, a chip system, or a processor) configured in the terminal, or a logical module, software, or the like that can implement all or some functions of the terminal. The verification network element may be replaced with a component (for example, a chip, a chip system, or a processor) configured in the verification network element, or a logical module, software, or the like that can implement all or some functions of the verification network element. The storage network element may be replaced with a component (for example, a chip, a chip system, or a processor) configured in the storage network element, or a logical module, software, or the like that can implement all or some functions of the storage network element.

The method 300 shown in FIG. 3 includes step 310 to step 340. The following describes steps in the method 300 in detail.

Step 310: The terminal obtains a user identifier.

The user identifier is used to identify the terminal, or the user identifier is used to identify a UICC in the terminal. The UICC may be a physical card, an embedded card embedded into hardware, a software card, or the like. This is not limited in this application. The user identifier corresponds to profile information in the storage network element.

In this application, the terminal may include one or more user identifiers, and each user identifier corresponds to one piece of profile information. The profile information includes credential information needed for authenticating the terminal. For example, the profile information includes a public key of the terminal, a validity period of an authentication credential, an issuer of the authentication credential, and the like. The authentication credential may be, for example, a certificate (a format standard of the certificate is not limited in this application, for example, the certificate is a certificate in X.509 format, a lightweight certificate, or a certificate in an operator-defined format).

For example, the terminal obtains a user identifier needed for current access to an operator, where the user identifier may be a user identifier used when a user subscribes to the operator to be currently accessed. For example, the terminal completes subscription with an operator 1 based on a user identifier 1, and writes subscription-related information into profile information corresponding to the user identifier 1. When the terminal accesses the operator 1, the terminal may obtain the user identifier 1, to complete authentication.

It may be understood that the terminal may subscribe to a plurality of operators. In other words, when the terminal does not subscribe to an operator, the terminal may also preconfigure user identifiers and profile information that correspond to the plurality of operators. In a possible implementation, before obtaining the user identifier, the terminal may determine, from the plurality of operators, a target operator to be accessed by the terminal.

In a first possible implementation, the terminal determines the target operator from the plurality of operators based on one or more of a user location, quality of service (for example, signal strength) of each of the plurality of operators, fees of each of the plurality of operators, or security of each of the plurality of operators. By way of example but not limitation, the terminal may select an operator in the user location as the target operator, may select an operator with strongest signal strength among the plurality of operators as the target operator, or may select an operator with lowest costs in the plurality of operators as the target operator.

For example, in response to an operation of selecting one or more of the following conditions by a user, the terminal determines the target operator based on a condition selected by the user: The target operator is an operator in the user location among the plurality of operators, the target operator is an operator with strongest signal strength among the plurality of operators, the target operator is an operator with lowest costs among the plurality of operators, or the target operator is an operator with highest security among the plurality of operators.

In a second possible implementation, the terminal determines the target operator from the plurality of operators in response to a user operation, where the user operation is an operation of selecting the target operator from the plurality of operators by a user.

For example, the terminal determines the target operator in response to the operation of selecting the target operator from the plurality of operators by the user. For example, the terminal displays an operator 1, an operator 2, an operator 3, and an operator 4 in a user interface. Each operator corresponds to signal strength, a location, fees, or the like. The terminal determines that the target operator is the operator 1 in response to an operation of selecting the operator 1 by the user. In other words, the terminal selects the operator 1 for access authentication.

In a third possible implementation, the terminal arbitrarily selects any one of the plurality of operators as the target operator.

It should be noted that the plurality of operators may be operators in a distributed storage system (for example, a blockchain), or may not be operators in the distributed storage system. This is not limited in this application. For example, when the plurality of operators are not operators in the distributed storage system, an example in which the plurality of operators are an operator A and an operator B is used. The operator A and the operator B sign mutually trusted certificates, that is, the operator A and the operator B may obtain information needed by each other for authenticating the terminal. In a first case, the operator A and the operator B each preconfigure a certificate of each other as a trusted certificate. Alternatively, in a second case, the operator A and the operator B have mutually signed cross-certified certificates. Alternatively, in a third case, the operator A and the operator B establish trust by using a bridge. In this case, the operator A and the operator B are not on the blockchain. When a terminal having a certificate issued by the operator A accesses a network of the operator B, in the first case, the operator B preconfigures the certificate of the operator A as a root of trust, and the operator B may directly authenticate the terminal (verify a certificate of the terminal based on the certificate of the operator A); in the second case, the cross-certified certificate issued by the operator B to the operator A is verified based on the certificate of the operator B, so that a certificate of the terminal is further verified; or in the third case, the certificate of the operator A is verified based on a certificate of the bridge, and a certificate of the terminal is further verified based on the certificate of the operator A. It may be understood that, if the operator A and the operator B are neither the operators in the distributed storage system, nor have signed mutually trusted certificates, it is likely to return to a home operator for authenticating the terminal. However, in this application, each operator in the distributed storage system may be used as a home operator to authenticate the terminal, so that there are more options, and flexibility is higher.

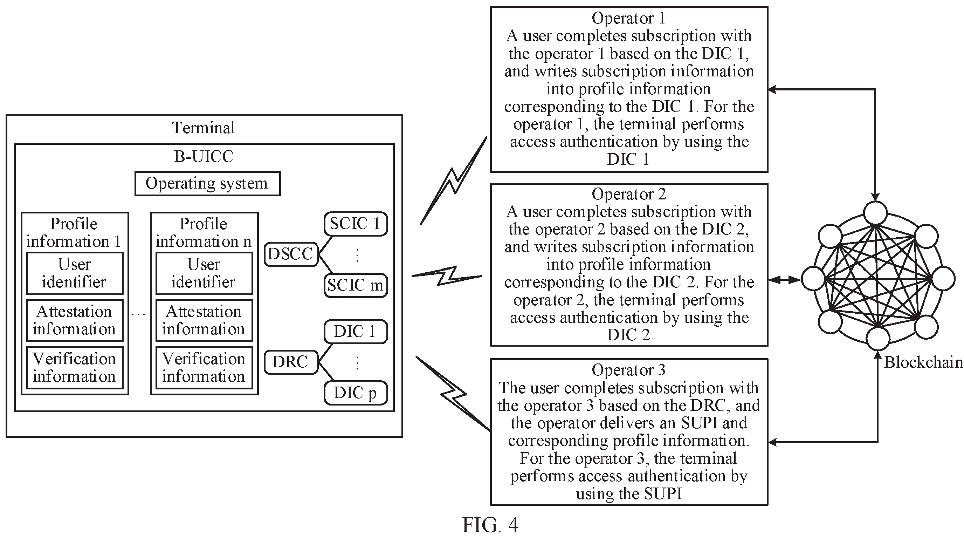

FIG. 4 is a diagram of subscription manners of a plurality of operators according to an embodiment of this application.

As shown in FIG. 4, a plurality of user identifiers are preconfigured in a terminal, for example, a DSCC, a DRC, an SCIC 1 to an SCIC m derived based on the DSCC, and a DIC 1 to a DIC p derived based on the DRC. Each user identifier corresponds to profile information. m and p are positive integers greater than or equal to 1. A user may complete subscription with an operator 1 based on the DIC 1, and write subscription-related information (for example, a subscription party, a validity period, and a public key of the terminal) into profile information corresponding to the DIC 1. When the user accesses a network of the operator 1, the terminal may perform access authentication by using the DIC 1. The user may also complete subscription with an operator 2 based on the DIC 2, and write subscription-related information into profile information corresponding to the DIC 2. When the user accesses a network of the operator 2, the terminal performs access authentication by using the DIC 2. The user may further complete subscription with an operator 3 based on the DRC, and the operator delivers an SUPI and corresponding profile information. When the user accesses a network of the operator 3, the terminal performs access authentication by using the SUPI.

Optionally, information (or profile information corresponding to the user identifier) needed for performing access authentication on the terminal may be obtained from a blockchain. It may be understood that the blockchain is merely an example, and should not constitute any limitation on embodiments of this application. For example, a distributed storage system of another type, for example, a decentralized shared profile information storage system or an IPFS, may also store profile information. This is not limited in this application. Nodes in the distributed storage systems may be network elements in a core network. In addition, a network element may also exist in the core network as a proxy of the distributed storage system, and periodically synchronizes profile information in the distributed storage system, to provide the profile information for the verification network element for authentication.

Step 320: The terminal sends the user identifier to the verification network element, and the verification network element receives the user identifier.

The verification network element is a network element of a target operator accessed by the terminal. For example, the verification network element may be a core network element of the target operator accessed by the terminal. For example, the verification network element may be an AUSF network element, an AMF network element, or any other core network element. For another example, the verification network element may alternatively be an access network element of the target operator accessed by the terminal. For example, the verification network element may be an access network node accessed by the terminal. This is not limited in this application.

The user identifier may be encrypted by using a session key. The session key may be generated, for example, based on an ephemeral private key of the terminal and a public key of the verification network element. In other words, the terminal may generate the session key based on the ephemeral private key of the terminal and the public key of the verification network element, encrypt information such as the user identifier based on the session key, and send the encrypted user identifier to the verification network element.

In a possible implementation, the user identifier includes a DRC, a DIC, a DSCC, or an SCIC. As described above, each DRC, DIC, DSCC, or SCIC corresponds to profile information. After completing initial subscription authentication by using other endorsement credential information of the DRC, the DIC, the DSCC, or the SCIC, an operator may issue, to the terminal, a credential endorsed by the operator for identity authentication during access, or may directly use another endorsement credential during initial authentication for identity authentication during subsequent access.

In other words, the terminal may send the DRC, the DIC, the DSCC, or the SCIC to the verification network element, and correspondingly, the verification network element may receive the user identifier, to obtain the profile information corresponding to the user identifier, so as to authenticate the terminal.

The profile information may include an authentication credential (for example, a certificate), and the authentication credential may include one or more of the following information: a public key, an issuer, a validity period, a signature of the issuer, a version number, an identifier of the terminal, and a certificate status query method (for example, revocation list information and an OCSP). The issuer specifies an identifier of an endorsement party that endorses the authentication credential. For example, the DIC has two authentication credentials. If one authentication credential is derived from the DRC, an issuer of the authentication credential is the DRC. If the other authentication credential is signed by an operator, an issuer of the authentication credential is an scID of the operator. For another example, if the DSCC is self-generated, an issuer of the authentication credential is the terminal.

In a possible implementation, the user identifier includes a pseudonym identifier, there is a correspondence between the pseudonym identifier and a real identifier, and a storage network element stores the real identifier and corresponding profile information.

It may be understood that sending the pseudonym identifier by the terminal helps improve security. The storage network element may store a real identifier (or an identifier during subscription) and corresponding profile information. There is a correspondence between a pseudonym identifier and the real identifier. The storage network element may determine a real identifier based on a pseudonym identifier and the correspondence, and further determine corresponding profile information based on the real identifier.

The real identifier may be, for example, the DRC, the DIC, the DSCC, or the SCIC described above. This is not limited in this application.

In a possible implementation, the user identifier includes a transaction address, and the transaction address indicates a location of the profile information corresponding to the user identifier in the distributed storage system.

The user identifier may include the transaction address, that is, the location, in the distributed storage system, of the profile information used to authenticate the terminal.

Optionally, there may be one or more transaction addresses. This is not limited in this application. When there are a plurality of transaction addresses, it indicates that the profile information used to authenticate the terminal is split into a plurality of pieces of profile information, and the plurality of pieces of profile information are respectively stored at a plurality of locations in the distributed storage system. The storage unit may determine, based on the transaction addresses, all parts of profile information stored at all locations, and combine all the parts of profile information to obtain the entire profile information, where the entire profile information may correspond to one DRC, DIC, DSCC, or SCIC.

In a possible case, the terminal may send the transaction address to the verification network element, and the verification network element obtains corresponding profile information from the storage network element based on the transaction address. Correspondingly, the storage network element determines the corresponding profile information based on the transaction address.

In another possible case, the terminal may send the transaction address and one of the DRC, the DIC, the DSCC, the SCIC, or the pseudonym identifier to the verification network element. For example, one of the DRC, the DIC, the DSCC, the SCIC, or the pseudonym identifier may be used to query for corresponding profile information. Assuming that the profile information includes a plurality of authentication credentials and an algorithm corresponding to each authentication credential, the transaction address may be used to determine a target authentication credential from the plurality of authentication credentials. In other words, the terminal may indicate, by using the transaction address, which authentication credential is to be selected. In a possible implementation, the authentication credential may be understood as a certificate, and different authentication credentials may be understood as certificates in different format standards, for example, a certificate in X.509 format or a lightweight certificate. The algorithm corresponding to each authentication credential may include a signature algorithm used in a certificate, a signature verification algorithm that needs to be used, and the like. Each authentication credential may correspond to one or more algorithms. This is not limited in this application. In another possible implementation, different authentication credentials may be a plurality of certificates in a same format standard. For example, the terminal may have three authentication credentials, and formats of the three authentication credentials each are X.509 format.

In a possible implementation, in addition to the information such as the public key and the issuer enumerated above, the profile information may further include a transaction address of information about the issuer on the blockchain. There may be one or more transaction addresses. This is not limited in this application.

In a possible implementation, the user identifier is carried in first signaling, the first signaling further includes a type of the user identifier and/or an identifier of the distributed storage system, and the identifier of the distributed storage system is used to identify a distributed storage system in which the profile information corresponding to the user identifier is located.

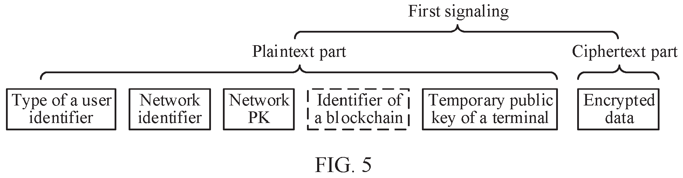

The type of the user identifier indicates a format of the first signaling to the verification network element. For example, if the type of the user identifier indicates that the user identifier carried in the first signaling is an SUCI, the verification network element parses the signaling based on a format of the signaling carrying the SUCI. If the type of the user identifier indicates that the user identifier carried in the first signaling is not the SUCI, or indicates that the user identifier carried in the first signaling is any one of the foregoing scIDs, the transaction address, or the pseudonym identifier, the verification network element may parse the signaling based on a format of the signaling shown in FIG. 5. Optionally, the type of the user identifier may be further used to notify the verification network element of a type of the user identifier carried in the first signaling. For example, the type of the user identifier is the DRC, the DIC, the DSCC, the SCIC, the transaction address, or the pseudonym identifier.

The identifier of the distributed storage system is used to identify the distributed storage system in which the profile information corresponding to the user identifier is located. A blockchain is used as an example of the distributed storage system. An identifier of the blockchain is used to identify a blockchain to which identity information belongs, or is used to identify a blockchain in which profile information corresponding to a current user identifier is located. It may be understood that, when there are a plurality of blockchains, the identifier of the blockchain helps the verification network element determine the blockchain in which the profile information corresponding to the user identifier is located, and obtain, on the corresponding blockchain, the profile information corresponding to the user identifier.

It should be understood that information carried in the first signaling is merely an example, and should not constitute any limitation on this application. For example, the first signaling may further include a network identifier (network identifier), a network public key (public key, PK), an ephemeral public key of the terminal, and the like. The network PK is used to identify a network public key used to encrypt the user identifier. For example, a network may have a plurality of public keys. Therefore, the terminal needs to indicate which public key is used when a session key is calculated, so that the network determines which private key corresponding to the public key is used when the session key is calculated.

With reference to FIG. 5, the following provides an example of a format of signaling exchanged between the terminal and the verification network element. FIG. 5 is a diagram of a format of first signaling according to an embodiment of this application. As shown in FIG. 5, the first signaling includes a plaintext part and a ciphertext part. The plaintext part includes a type of a user identifier, a network identifier, a network PK, and an ephemeral public key of the terminal. Optionally, the plaintext part further includes an identifier of a blockchain. The ciphertext part includes encrypted data. The encrypted data is ciphertext data obtained by encrypting a user identifier, a random number, a session identifier, and the like based on a session key. The session key may be a symmetric key generated based on an ephemeral private key of the terminal and the network public key.

Step 330: The verification network element obtains, from the storage network element, the profile information corresponding to the user identifier. The profile information includes the public key of the terminal. Step 330 may specifically include, for example, step 331 and step 332.

Step 331: The verification network element sends the user identifier to the storage network element.

Step 332: The storage network element sends the profile information corresponding to the user identifier to the verification network element.

After receiving the user identifier from the verification network element, the storage network element determines the profile information corresponding to the user identifier, and then sends the profile information corresponding to the user identifier to the verification network element.

In an example, the user identifier is the DRC, the DIC, the DSCC, or the SCIC. The storage network element determines, based on the user identifier, the profile information corresponding to the user identifier, and sends the profile information corresponding to the user identifier to the verification network element.

In another example, the user identifier is a pseudonym identifier. The storage network element may determine a real identifier based on the pseudonym identifier and the correspondence, determine the corresponding profile information based on the real identifier, and send the profile information to the verification network element.

In still another example, the user identifier is a transaction address. The storage network element may determine, based on the transaction address, one or more locations at which the profile information is stored in the distributed storage system, obtain profile information at a corresponding location, and after obtaining the profile information, send the profile information corresponding to the transaction address to the verification network element.

In a possible implementation, the storage network element is a node in the distributed storage system, and the node stores at least one user identifier and profile information corresponding to each user identifier.

In this application, the distributed storage system may include one or more nodes, each node may store at least one user identifier and profile information corresponding to each user identifier, and the storage network element may be any one of the one or more nodes.

It should be noted that it is merely an example that the storage network element is the node in the distributed storage system, and should not constitute any limitation on this application. For example, during actual application, the storage network element may be another management network element, for example, may be a network element inside a core network. The network element may serve as a proxy of the distributed storage system, and periodically synchronize profile information in the distributed storage system, to provide the profile information for the verification network element for authentication.

In addition, in this application, the verification network element and the storage network element may be a same network element, or may be different network elements. This is not limited in this application. When the verification network element and the storage network element are the same network element, that the verification network element obtains, from the storage network element, the profile information corresponding to the user identifier may be understood as that the verification network element obtains, from a memory or a local storage, the profile information corresponding to the user identifier. When the verification network element and the storage network element are different network elements, that the verification network element obtains, from the storage network element, the profile information corresponding to the user identifier may be understood as that the verification network element sends the user identifier to the storage network element and receives, from the storage network element, the profile information corresponding to the user identifier.

In a possible implementation, the distributed storage system is a blockchain, a decentralized shared profile information storage system, or an interplanetary file system. For the blockchain, refer to the related descriptions in FIG. 2B.

Step 340: The verification network element authenticates the terminal based on the profile information.

After obtaining, from the storage network element, the profile information corresponding to the user identifier, the verification network element authenticates the terminal based on the profile information. The profile information includes information needed for authenticating the terminal, for example, the public key of the terminal.

In a possible implementation, the verification network element may verify a digital signature of the terminal based on the public key of the terminal. If the verification performed by the verification network element on the digital signature of the terminal succeeds, it is considered that the authentication performed by the verification network element on the terminal succeeds. Correspondingly, if the verification performed by the verification network element on the digital signature of the terminal fails, it is considered that the authentication performed by the verification network element on the terminal fails.

For example, the verification network element receives, from the terminal, a first message and a digital signature of the terminal, where the digital signature of the terminal is obtained by signing a second message or a hash value of the second message based on a private key of the terminal, and the second message is a message exchanged between the terminal and the verification network element or the first message; and verifies the digital signature of the terminal based on the public key of the terminal. The second message may be one or more of all messages exchanged between the terminal and the verification network element. This is not limited in this application.

For example, before the terminal sends the first message, messages exchanged between the terminal and the verification network element include a message 1 (which may be, for example, a message sent by the terminal to the verification network element), a message 2 (which may be, for example, a message sent by the verification network element to the terminal), and a message 3 (which may be, for example, a message sent by the verification network element to the terminal). The terminal may sign a hash value of the message 1, a hash value of the message 2, and a hash value of the message 3 based on the private key of the terminal, to obtain the digital signature of the terminal, and send the first message and the digital signature of the terminal to the verification network element, where the message 1, the message 2, and the message 3 are examples of the second message. After receiving the first message and the digital signature of the terminal, the verification network element verifies the digital signature of the terminal based on the public key of the terminal.

Optionally, before the verifying the digital signature of the terminal based on the public key of the terminal, the method further includes: obtaining an authentication credential of an issuer from the storage network element, where the issuer is an issuer of an authentication credential of the terminal; and verifying the authentication credential of the terminal based on the authentication credential of the issuer.

It may be understood that the verification network element may obtain the corresponding profile information based on the user identifier of the terminal, and verify the signature of the terminal based on the public key. Before this, the verification network element may further verify the authentication credential of the terminal based on information about the issuer of the authentication credential of the terminal. For example, the authentication credential is a certificate. The verification network element verifies the signature of the terminal. First, the verification network element obtains a certificate of the terminal based on the user identifier, and obtains a certificate of the issuer, for example, an operator/a card vendor, from the blockchain or the storage network element based on issuer information (or transaction address information) in the certificate. In this case, the verification network element first verifies the certificate of the terminal by using a public key of the operator/the card vendor, and further verifies the digital signature of the terminal by using a public key in the certificate of the terminal. A verification chain may be longer (indicating that a user may derive more identities). For example, a certificate of a DRC is verified based on the public key in the certificate of the card vendor, then a certificate of a DIC is verified based on a public key in the DRC, and the digital signature of the terminal is verified based on a public key in the DIC; or a certificate of a DIC is verified based on the public key of the operator, and then the digital signature of the terminal is verified based on a public key in the DIC. Optionally, the method 300 further includes: The verification network element sends a third message and a digital signature of the verification network element to the terminal, where the digital signature of the verification network element is obtained by signing a fourth message or a hash value of the fourth message based on a private key of the verification network element, and the fourth message is a message exchanged between the terminal and the verification network element or the third message.

The verification network element sends the digital signature of the verification network element to the terminal, and the terminal verifies the digital signature of the verification network element based on a public key of the verification network element, and verifies the verification network element based on the public key of the verification network element, so that the terminal can verify a verification network element corresponding to any operator. In this way, the terminal can access different operators, with higher flexibility.

The fourth message may be one or more of all messages exchanged between the terminal and the verification network element. It may be understood that because time at which the verification network element receives the second message is different from time at which the verification network element sends the third message, messages exchanged between the terminal and the verification network element also change. Therefore, the second message and the fourth message may be different.

For example, before the verification network element sends the third message, messages exchanged between the terminal and the verification network element include a message 1 (which may be, for example, a message sent by the terminal to the verification network element) and a message 2 (which may be, for example, a message sent by the verification network element to the terminal). The verification network element may sign a hash value of the message 1 and a hash value of the message 2 based on the private key of the verification network element, to obtain the digital signature of the verification network element, and send the third message and the digital signature of the verification network element to the terminal, where the message 1 and the message 2 are examples of the second message. After receiving the third message and the digital signature of the verification network element, the terminal verifies the digital signature of the verification network element based on the public key of the verification network element.

It should be noted that the verification network element may receive the first message and the digital signature of the terminal before sending the third message and the digital signature of the verification network element, or may receive the first message and the digital signature of the terminal after sending the third message and the digital signature of the verification network element. This is not limited in this application. For example, the verification network element may receive the first message and the digital signature of the terminal, verify the digital signature of the terminal based on the public key of the terminal, and send the third message and the digital signature of the verification network element to the terminal when the verification succeeds.

Optionally, the method 300 further includes: The verification network element sends a certificate of the verification network element to the terminal.

The verification network element sends the certificate of the verification network element to the terminal, and the certificate of the verification network element does not need to be preconfigured in the terminal. When there are a large quantity of verification network elements, certificates of all the verification network elements do not need to be preconfigured in the terminal. This helps save storage space on the terminal.

The certificate of the verification network element includes, for example, the public key of the verification network element, an issuer, a validity period, a signature of the issuer, a version number, an identifier of the verification network element, and a certificate status query method (for example, revocation list information and an OCSP). When the certificate of the verification network element is not preconfigured in the terminal, a certificate of the target operator may be preconfigured in the terminal. The certificate of the target operator includes a public key of the operator. The terminal may verify the certificate of the verification network element based on the certificate of the target operator, and further verify the digital signature of the verification network element based on the public key of the verification network element. The certificate of the verification network element is issued by the operator, that is, a signature of the certificate of the verification network element is generated by using a private key of the operator. The terminal may verify the signature of the certificate of the verification network element by using the public key in the certificate of the operator, and verify the digital signature of the verification network element by using the public key in the certificate of the verification network element. If both the verification processes succeed, it is considered that the authentication performed by the terminal on the verification network element succeeds.

Optionally, the certificate of the verification network element and the digital signature of the verification network element may be carried in a same piece of signaling, or may be carried in different pieces of signaling. This is not limited in this application.

Optionally, the profile information further includes at least one authentication credential and an algorithm corresponding to each of the at least one authentication credential; and the method 300 further includes: The verification network element determines a target authentication credential from the at least one authentication credential; and sends first indication information to the terminal, where the first indication information indicates the target authentication credential and/or an algorithm corresponding to the target authentication credential.

In this application, in a possible design, different authentication credentials may be understood as certificates in different format standards, for example, a certificate in X.509 format, a lightweight certificate, and a certificate in an operator-defined format. The algorithm corresponding to each authentication credential may include a signature algorithm used in a certificate, a signature verification algorithm that needs to be used, and the like. Each authentication credential may correspond to one or more algorithms. This is not limited in this application. In another possible design, different authentication credentials may be a plurality of certificates in a same format standard. For example, the terminal may have three authentication credentials, and formats of the three authentication credentials each are X.509 format.

For example, after obtaining the profile information corresponding to the file identifier, the verification network element may determine the target authentication credential from the at least one authentication credential included in the profile information, and indicate, to the terminal, the target authentication credential and/or the algorithm corresponding to the target authentication credential. For example, the profile information includes a certificate 1, a certificate 2, and a certificate 3. Each certificate includes a public key of the terminal, an issuer, a validity period, and the like. The certificate 1, the certificate 2, and the certificate 3 may be certificates in different format standards. The verification network element may determine that the target authentication credential is the certificate 1, and further indicate, to the terminal, the certificate 1 and a corresponding algorithm (for example, a signature algorithm used in the certificate and a signature verification algorithm that needs to be used).

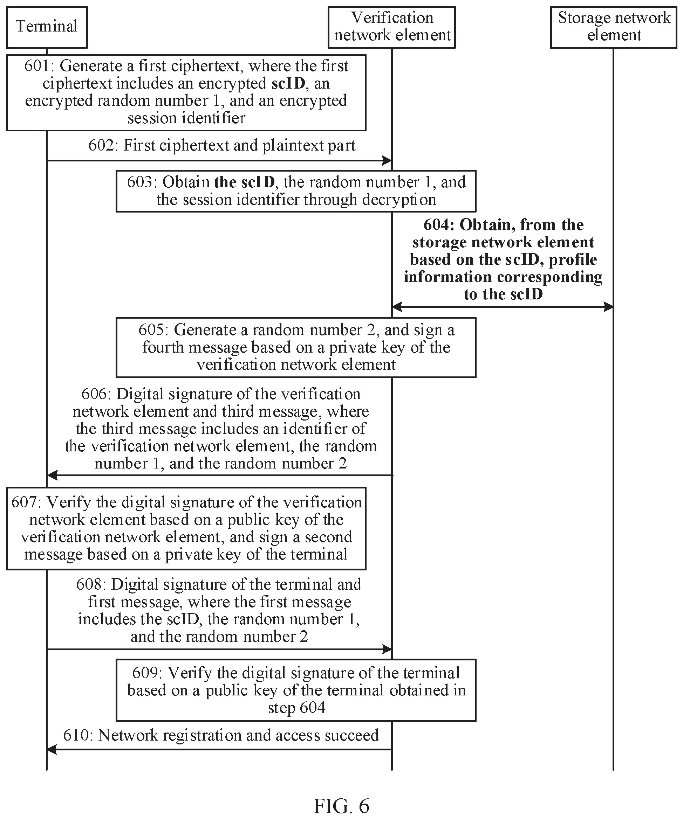

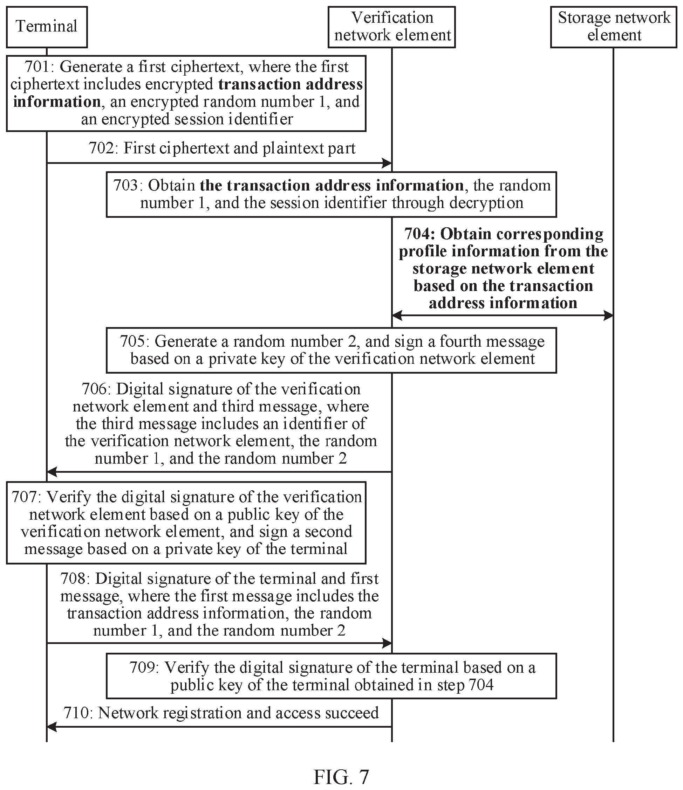

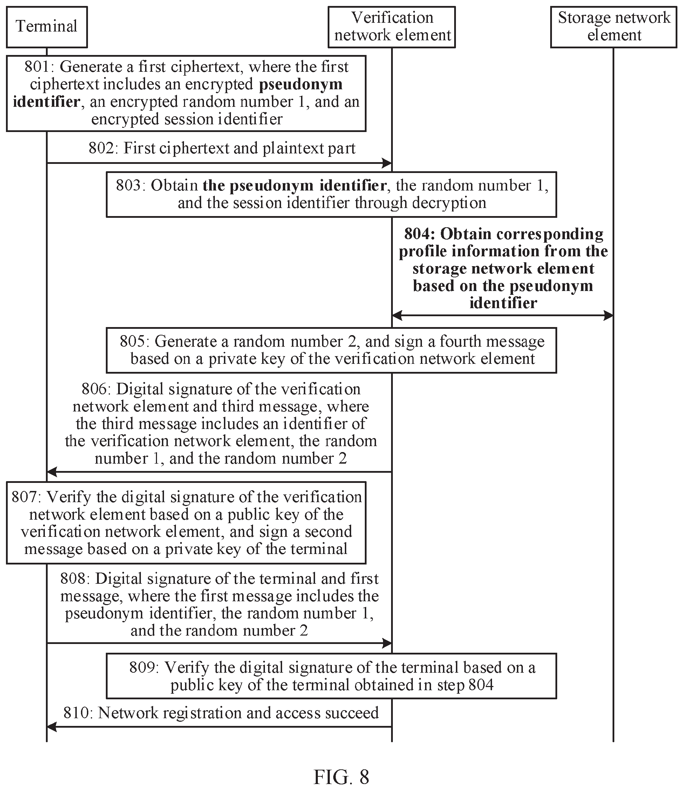

The following describes the access authentication procedure shown in FIG. 3 in detail with reference to FIG. 6 to FIG. 8. In an embodiment shown in FIG. 6, the user identifier sent by the terminal to the verification network element includes a DRC, a DIC, a DSCC, or an SCIC, and the DRC, the DIC, the DSCC, or the SCIC may be collectively referred to as an scID. In an embodiment shown in FIG. 7, the user identifier sent by the terminal to the verification network element includes a transaction address. In an embodiment shown in FIG. 8, the user identifier sent by the terminal to the verification network element includes a pseudonym identifier.

FIG. 6 is a diagram of an access authentication procedure according to an embodiment of this application.

Step 601: A terminal generates a first ciphertext, where the first ciphertext includes an encrypted scID, an encrypted random number 1, and an encrypted session identifier.

For example, the first ciphertext may be obtained by encrypting the scID, the random number 1, and the session identifier based on a session key, and the session key may be generated based on an ephemeral private key of the terminal and a public key of a verification network element. The session identifier is used to identify a current session. The random number 1 may be used to prevent a replay attack. For example, if a message sent by the terminal to the verification network element includes the random number 1, a digital signature of the verification network element sent by the verification network element includes the random number 1, to prevent a replay attack from a third party on the terminal.

For example, the terminal generates an ephemeral public-private key pair used to access a network this time, generates the session key based on the ephemeral private key and the public key of the verification network element (the public key of the verification network element may be preconfigured), and encrypts the scID, the random number 1, the session identifier, and the like by using the session key.

Optionally, the public key of the verification network element may alternatively be replaced with a public key of an operator. In this case, the verification network element needs to have a private key of the operator, and the operator and the verification network element may have a set of public and private keys.

Step 602: The terminal sends the first ciphertext and a plaintext part to the verification network element, and correspondingly, the verification network element receives the first ciphertext and the plaintext part.

The plaintext part is a part that does not need to be encrypted. For example, the plaintext part includes but is not limited to a type of a user identifier, a network identifier, a network public key, an ephemeral public key of the terminal, and an identifier of a distributed storage system.

For example, after generating the first ciphertext, the terminal sends the first ciphertext and the plaintext part to the verification network element, and correspondingly, the verification network element receives the first ciphertext and the plaintext part.

Step 603: The verification network element obtains the scID, the random number 1, and the session identifier through decryption.

For example, the verification network element may generate the session key by using a private key of the verification network element and the ephemeral public key of the terminal, and decrypt the first ciphertext based on the session key, to obtain the scID, the random number 1, and the session identifier.

Step 604: The verification network element obtains, from a storage network element based on the scID, profile information corresponding to the scID.

For example, the verification network element sends the scID to the storage network element, and correspondingly, the storage network element receives the scID. Further, the storage network element determines, based on the scID, the profile information corresponding to the scID, and sends the profile information to the verification network element, and correspondingly, the verification network element receives the profile information.

Optionally, the profile information may include at least one authentication credential and an algorithm corresponding to each of the at least one authentication credential. For explanations of the at least one authentication credential and the algorithm corresponding to each of the at least one authentication credential, refer to the method corresponding to FIG. 3. Details are not described herein again.

Step 605: The verification network element generates a random number 2, and signs a fourth message based on the private key of the verification network element. The fourth message may be one or more of all messages exchanged between the terminal and the verification network element.

The random number 2 may be used to prevent a replay attack. For example, if a message sent by the verification network element to the terminal includes the random number 2, a digital signature of the terminal sent by the terminal includes the random number 2, to prevent a replay attack on the verification network element by a third party.

The fourth message may be a message sent by the terminal to the verification network element in step 602, or may be a third message sent by the verification network element to the terminal in step 606. This is not limited in this application.

It may be understood that the verification network element may alternatively sign a hash value of the fourth message based on the private key of the verification network element. This is not limited in this application.

Step 606: The verification network element sends a digital signature of the verification network element and the third message to the terminal, where the third message includes an identifier of the verification network element, the random number 1, and the random number 2, and correspondingly, the terminal receives the digital signature of the verification network element and the third message.

The third message may be encrypted, for example, may be encrypted based on the session key generated by the verification network element.

Optionally, the third message may further include a certificate of the verification network element. If the third message includes the certificate of the verification network element, it depends on a certificate preconfigured in the terminal. If the certificate of the verification network element is preconfigured in the terminal, the terminal may directly perform verification. If a certificate of an operator is preconfigured in the terminal, the terminal first verifies the certificate of the verification network element by using the certificate of the operator, and then verifies the digital signature of the verification network element by using a public key of the verification network element. For a specific process, refer to the related descriptions in FIG. 3.

Step 607: The terminal verifies the digital signature of the verification network element based on the public key of the verification network element, and signs a second message based on a private key of the terminal.

The second message may be one or more of all messages exchanged between the terminal and the verification network element. For example, the second message may be the message sent by the terminal to the verification network element in step 602 and the third message sent by the verification network element to the terminal in step 606, or may be a first message sent by the terminal to the verification network element in step 608. This is not limited in this application.

It may be understood that the terminal may alternatively sign a hash value of the second message based on the private key of the terminal. This is not limited in this application.

If the verification performed by the terminal on the digital signature of the verification network element succeeds, step 608 is performed. If the verification performed by the terminal on the digital signature of the verification network element fails, access of the terminal fails. For example, the terminal may attempt to access the network again. In other words, the terminal may start to perform step 601 again.

Step 608: The terminal sends a digital signature of the terminal and the first message to the verification network element, where the first message includes the scID, the random number 1, and the random number 2, and correspondingly, the verification network element receives the digital signature of the terminal and the first message.

The first message may be encrypted, for example, may be encrypted based on the session key generated by the terminal.

Optionally, the terminal may alternatively send the digital signature of the terminal in step 602. In other words, the terminal may send the digital signature of the terminal, the first ciphertext, and the plaintext part in step 602. For example, the digital signature of the terminal may be obtained by signing the first ciphertext and the plaintext part based on the private key of the terminal. In this case, the verification network element may perform step 609 after step 604, that is, verify the digital signature of the terminal based on a public key of the terminal. In addition, the terminal may not perform step 608.

Step 609: The verification network element verifies the digital signature of the terminal based on the public key of the terminal obtained in step 604.

After receiving the digital signature of the terminal and the first message, the verification network element verifies the digital signature of the terminal based on the public key of the terminal in the profile information in step 604. If the verification performed by the verification network element on the digital signature of the terminal succeeds, it is considered that authentication performed by the verification network element on the terminal succeeds. Correspondingly, if the verification performed by the verification network element on the digital signature of the terminal fails, it is considered that the authentication performed by the verification network element on the terminal fails.

Step 610: The verification network element sends, to the terminal, an indication message indicating that network registration and access succeed, and correspondingly, the terminal receives the indication message.

FIG. 7 is another diagram of an access authentication procedure according to an embodiment of this application.

Step 701: A terminal generates a first ciphertext, where the first ciphertext includes encrypted transaction address information, an encrypted random number 1, and an encrypted session identifier.

For example, the first ciphertext may be obtained by encrypting the transaction address information, the random number 1, and the session identifier based on a session key, and the session key may be generated based on an ephemeral private key of the terminal and a public key of a verification network element. The session identifier is used to identify a current session.

In a possible implementation, the transaction address information may include a transaction address list and a quantity. The quantity is a quantity of transaction addresses in the transaction address list. The transaction address list includes one or more transaction addresses, and the one or more transaction addresses indicate a location of profile information in a distributed storage system. For more detailed descriptions of the transaction address, refer to FIG. 3. Details are not described herein again.

For example, the terminal generates an ephemeral public-private key pair used to access a network this time, generates the session key based on the ephemeral private key and the public key of the verification network element (the public key of the verification network element may be preconfigured), and encrypts the transaction address list and the quantity, the random number 1, the session identifier, and the like by using the session key.

Step 702: The terminal sends the first ciphertext and a plaintext part to the verification network element, and correspondingly, the verification network element receives the first ciphertext and the plaintext part.

For descriptions of step 702, refer to step 602.

Step 703: The verification network element obtains the transaction address information, the random number 1, and the session identifier through decryption.

For example, the verification network element may generate the session key by using a private key of the verification network element and an ephemeral public key of the terminal, and decrypt the first ciphertext based on the session key, to obtain the transaction address list and the quantity, the random number 1, and the session identifier.

Step 704: The verification network element obtains corresponding profile information from a storage network element based on the transaction address information.

For example, the verification network element sends the transaction address information to the storage network element, where the transaction address information includes the transaction address list and the quantity of transaction addresses in the transaction address list, and correspondingly, the storage network element receives the transaction address information. Further, the storage network element determines each location of profile information in the distributed storage system based on the transaction address in the transaction address list, and obtains the profile information. Further, the storage network element sends the profile information to the verification network element, and correspondingly, the verification network element receives the profile information.

Optionally, the profile information may include at least one authentication credential and an algorithm corresponding to each of the at least one authentication credential. For explanations of the at least one authentication credential and the algorithm corresponding to each of the at least one authentication credential, refer to FIG. 3. Details are not described herein again.

Step 705: The verification network element generates a random number 2, and signs a fourth message based on the private key of the verification network element. The fourth message may be one or more of all messages exchanged between the terminal and the verification network element.

For example, the fourth message may be a message sent by the terminal to the verification network element in step 702, or may be a third message sent by the verification network element to the terminal in step 706. This is not limited in this application.

It may be understood that the verification network element may alternatively sign a hash value of the fourth message based on the private key of the verification network element. This is not limited in this application.

Step 706: The verification network element sends a digital signature of the verification network element and the third message to the terminal, where the third message includes an identifier of the verification network element, the random number 1, and the random number 2, and correspondingly, the terminal receives the digital signature of the verification network element and the third message.

The third message may be encrypted, for example, may be encrypted based on the session key generated by the verification network element.

Step 707: The terminal verifies the digital signature of the verification network element based on the public key of the verification network element, and signs a second message based on a private key of the terminal.

The second message may be one or more of all messages exchanged between the terminal and the verification network element. For example, the second message may be the message sent by the terminal to the verification network element in step 702 and the third message sent by the verification network element to the terminal in step 706, or may be a first message sent by the terminal to the verification network element in step 708. This is not limited in this application.

It may be understood that the terminal may alternatively sign a hash value of the second message based on the private key of the terminal. This is not limited in this application.

Step 708: The terminal sends a digital signature of the terminal and the first message to the verification network element, where the first message includes the transaction address information, the random number 1, and the random number 2, and correspondingly, the verification network element receives the digital signature of the terminal and the first message.

The first message may be encrypted, for example, may be encrypted based on the session key generated by the terminal.

Step 709: The verification network element verifies the digital signature of the terminal based on the public key of the terminal obtained in step 704.

After receiving the digital signature of the terminal and the first message, the verification network element verifies the digital signature of the terminal based on the public key of the terminal in the profile information in step 704. If the verification performed by the verification network element on the digital signature of the terminal succeeds, it is considered that authentication performed by the verification network element on the terminal succeeds. Correspondingly, if the verification performed by the verification network element on the digital signature of the terminal fails, it is considered that the authentication performed by the verification network element on the terminal fails.

Step 710: The verification network element sends, to the terminal, an indication message indicating that network registration and access succeed, and correspondingly, the terminal receives the indication message.

For more detailed descriptions of FIG. 7, refer to FIG. 6. Details are not described herein again.

FIG. 8 is still another diagram of an access authentication procedure according to an embodiment of this application.

Step 801: A terminal generates a first ciphertext, where the first ciphertext includes an encrypted pseudonym identifier, an encrypted random number 1, and an encrypted session identifier.

For example, the first ciphertext may be obtained by encrypting the pseudonym identifier, the random number 1, and the session identifier based on a session key, and the session key may be generated based on an ephemeral private key of the terminal and a public key of a verification network element. The session identifier is used to identify a current session.

For example, the terminal generates an ephemeral public-private key pair used to access a network this time, generates the session key based on the ephemeral private key and the public key of the verification network element (the public key of the verification network element may be preconfigured), and encrypts the pseudonym identifier, the random number 1, the session identifier, and the like by using the session key.

Step 802: The terminal sends the first ciphertext and a plaintext part to the verification network element, and correspondingly, the verification network element receives the first ciphertext and the plaintext part.

For descriptions of step 802, refer to step 602.

Step 803: The verification network element obtains the pseudonym identifier, the random number 1, and the session identifier through decryption.

For example, the verification network element may generate the session key by using a private key of the verification network element and an ephemeral public key of the terminal, and decrypt the first ciphertext based on the session key, to obtain the pseudonym identifier, the random number 1, and the session identifier.

Step 804: The verification network element obtains corresponding profile information from a storage network element based on the pseudonym identifier.

For example, the verification network element sends the pseudonym identifier to the storage network element, and correspondingly, the storage network element receives the pseudonym identifier. Further, the storage network element determines a real identifier based on the pseudonym identifier and a correspondence (a correspondence between the pseudonym identifier and the real identifier), and further obtains profile information corresponding to the real identifier. Further, the storage network element sends the profile information to the verification network element, and correspondingly, the verification network element receives the profile information. For related explanations of the pseudonym identifier, refer to FIG. 3. Details are not described herein again.

Step 805: The verification network element generates a random number 2, and signs a fourth message based on the private key of the verification network element. The fourth message may be one or more of all messages exchanged between the terminal and the verification network element.

For example, the fourth message may be a message sent by the terminal to the verification network element in step 802, or may be a third message sent by the verification network element to the terminal in step 806. This is not limited in this application.

It may be understood that the verification network element may alternatively sign a hash value of the fourth message based on the private key of the verification network element. This is not limited in this application.

Step 806: The verification network element sends a digital signature of the verification network element and the third message to the terminal, where the third message includes an identifier of the verification network element, the random number 1, and the random number 2, and correspondingly, the terminal receives the digital signature of the verification network element and the third message.

The third message may be encrypted, for example, may be encrypted based on the session key generated by the verification network element.

Step 807: The terminal verifies the digital signature of the verification network element based on the public key of the verification network element, and signs a second message based on a private key of the terminal.

The second message may be one or more of all messages exchanged between the terminal and the verification network element. For example, the second message may be the message sent by the terminal to the verification network element in step 802 and the third message sent by the verification network element to the terminal in step 806, or may be a first message sent by the terminal to the verification network element in step 808. This is not limited in this application.

It may be understood that the terminal may alternatively sign a hash value of the second message based on the private key of the terminal. This is not limited in this application.

Step 808: The terminal sends a digital signature of the terminal and the first message to the verification network element, where the first message includes the pseudonym identifier, the random number 1, and the random number 2, and correspondingly, the verification network element receives the digital signature of the terminal and the first message.

The first message may be encrypted, for example, may be encrypted based on the session key generated by the terminal.

Step 809: The verification network element verifies the digital signature of the terminal based on the public key of the terminal obtained in step 804.

After receiving the digital signature of the terminal and the first message, the verification network element verifies the digital signature of the terminal based on the public key of the terminal in the profile information in step 804. If the verification performed by the verification network element on the digital signature of the terminal succeeds, it is considered that authentication performed by the verification network element on the terminal succeeds. Correspondingly, if the verification performed by the verification network element on the digital signature of the terminal fails, it is considered that the authentication performed by the verification network element on the terminal fails.

Step 810: The verification network element sends, to the terminal, an indication message indicating that network registration and access succeed, and correspondingly, the terminal receives the indication message.

Based on the foregoing technical solution, the verification network element may obtain, from the storage network element based on the obtained user identifier of the terminal, the profile information corresponding to the user identifier, to complete authentication on the terminal based on the profile information. The verification network element may be the network element of the target operator accessed by the terminal. In other words, even if the verification network element is not a network element of a home operator, the verification network element may also obtain the profile information corresponding to the user identifier, to complete authentication on the terminal, without returning to the home operator for authentication. This helps simplify an authentication procedure.

For more detailed descriptions of FIG. 8, refer to FIG. 6. Details are not described herein again.

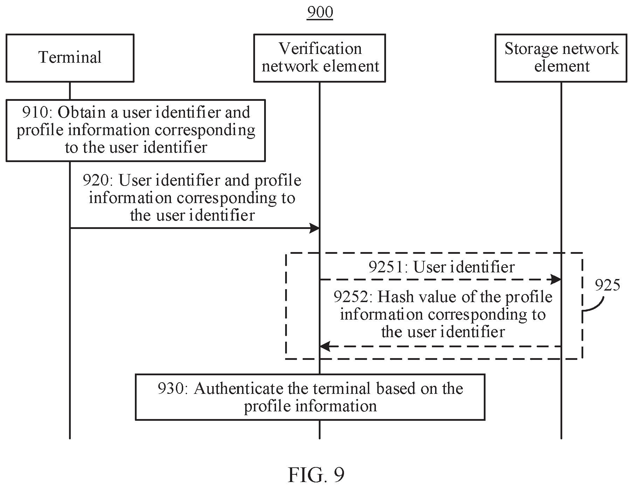

FIG. 9 is a schematic flowchart of an access authentication method 900 according to an embodiment of this application. In FIG. 9, the method is merely described from a perspective of interaction between a terminal, a verification network element, and a storage network element, but this should not constitute any limitation on this application. The terminal in FIG. 9 may be replaced with a component (for example, a chip, a chip system, or a processor) configured in the terminal, or a logical module, software, or the like that can implement all or some functions of the terminal. The verification network element may be replaced with a component (for example, a chip, a chip system, or a processor) configured in the verification network element, or a logical module, software, or the like that can implement all or some functions of the verification network element. The storage network element may be replaced with a component (for example, a chip, a chip system, or a processor) configured in the storage network element, or a logical module, software, or the like that can implement all or some functions of the storage network element.

The method 900 shown in FIG. 9 includes step 910 to step 930. The following describes steps in the method 900 in detail.

Step 910: The terminal obtains a user identifier and profile information corresponding to the user identifier.

The user identifier is used to identify the terminal, or the user identifier is used to identify a UICC in the terminal. The UICC may be a physical card, an embedded card embedded into hardware, a software card, or the like. This is not limited in this application. The verification network element may determine, based on the user identifier, a terminal (or a UICC) to be authenticated.

In this application, the terminal may include one or more user identifiers, and each user identifier corresponds to one piece of profile information. The profile information includes information needed for authenticating the terminal. For example, the profile information includes a public key of the terminal, a validity period of an authentication credential, an issuer of the authentication credential, and the like. The authentication credential may be, for example, a certificate (a format standard of the certificate is not limited in this application, for example, a certificate in X.509 format, a lightweight certificate, or a certificate in an operator-defined format).

For example, the terminal obtains a user identifier needed for current access to an operator and profile information corresponding to the user identifier. It may be understood that the terminal may store user identifiers corresponding to a plurality of operators and profile information. Therefore, the terminal may determine, from the plurality of operators, a target operator to be accessed by the terminal this time. For related descriptions of the plurality of operators and an implementation in which the terminal determines the target operator, refer to FIG. 3. Details are not described herein again.

Step 920: The terminal sends, to the verification network element, the user identifier and the profile information corresponding to the user identifier.

The verification network element is a network element of the target operator accessed by the terminal. For example, the verification network element may be a core network element of the target operator accessed by the terminal. For example, the verification network element may be an AUSF network element, an AMF network element, or any other core network element. For another example, the verification network element may alternatively be an access network element of the target operator accessed by the terminal. For example, the verification network element may be an access network node accessed by the terminal. This is not limited in this application.

The user identifier and the profile information may be encrypted by using a session key. The session key may be generated, for example, based on an ephemeral private key of the terminal and a public key of the verification network element. In other words, the terminal may generate the session key based on the ephemeral private key of the terminal and the public key of the verification network element, encrypt, based on the session key, the user identifier and the profile information corresponding to the user identifier, and send the encrypted user identifier and the encrypted profile information to the verification network element.

Optionally, the user identifier includes a DRC, a DIC, a DSCC, an SCIC, a transaction address, or a pseudonym identifier. For related explanations of the user identifier, refer to FIG. 3. Details are not described herein again.

Step 930: The verification network element authenticates the terminal based on the profile information.

For a specific process in which the verification network element authenticates the terminal, refer to the descriptions in FIG. 3. Details are not described herein again.

Optionally, before or after step 930, the method 900 further includes: The verification network element sends a third message and a digital signature of the verification network element to the terminal, where the digital signature of the verification network element is obtained by signing a fourth message or a hash value of the fourth message based on a private key of the verification network element, and the fourth message is a message exchanged between the terminal and the verification network element or the third message. Further, the terminal verifies the digital signature of the verification network element based on a public key of the verification network element.

For a process in which the terminal receives the third message and the digital signature of the verification network element, and verifies the digital signature, refer to FIG. 3. Details are not described herein again.

In a possible implementation, the method 900 further includes step 925: The verification network element obtains, from the storage network element based on the user identifier, a hash value of the profile information corresponding to the user identifier.

The hash value of the profile information may be a hash value corresponding to each authentication credential in the profile information, each authentication credential may correspond to one hash value, and all the hash values may be stored at a same location or different locations in a distributed storage system. This is not limited in this application.

The profile information includes the public key of the terminal. Step 925 may specifically include, for example, step 9251 and step 9252.

Step 9251: The verification network element sends the user identifier to the storage network element.

Step 9252: The storage network element sends the hash value of the profile information corresponding to the user identifier to the verification network element.

After receiving the user identifier from the verification network element, the storage network element determines the hash value of the profile information corresponding to the user identifier, and then sends the hash value of the profile information corresponding to the user identifier to the verification network element. For a process of obtaining hash values of profile information for different user identifiers, refer to the related explanations in step 332, provided that the profile information is replaced with the hash value of the profile information. Details are not described herein again.

After obtaining the hash value of the profile information corresponding to the user identifier, the storage network element may verify, based on the hash value of the profile information, the profile information obtained from the terminal. If the verification succeeds, the terminal is authenticated based on the profile information.

The verification network element obtains, from the storage network element based on the user identifier, the hash value of the profile information corresponding to the user identifier, that is, the storage network element stores the hash value of the profile information, and does not need to store the profile information. In this way, storage space on the storage network element can be saved, and user privacy can be ensured. It should be understood that for related explanations of the storage network element, refer to FIG. 3. Details are not described herein again.

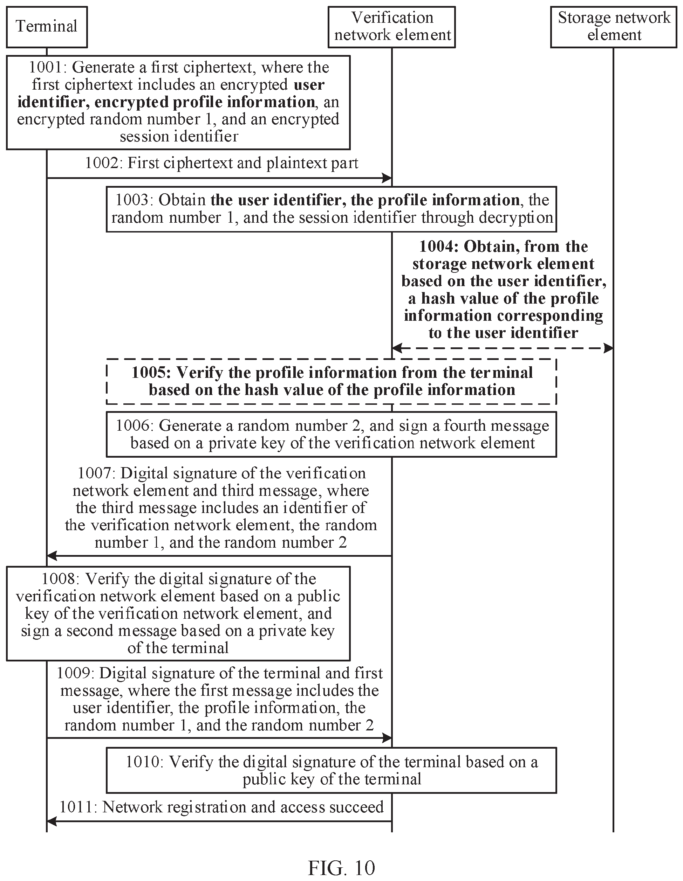

The following describes in detail the access authentication method shown in FIG. 9 with reference to FIG. 10.

FIG. 10 is yet another diagram of an access authentication procedure according to an embodiment of this application.

Step 1001: A terminal generates a first ciphertext, where the first ciphertext includes an encrypted user identifier, encrypted profile information, an encrypted random number 1, and an encrypted session identifier.

For example, the first ciphertext may be obtained by encrypting the user identifier, the profile information, the random number 1, and the session identifier based on a session key, and the session key may be generated based on an ephemeral private key of the terminal and a public key of a verification network element. The session identifier is used to identify a current session.

For example, the terminal generates an ephemeral public-private key pair used to access a network this time, generates the session key based on the ephemeral private key and the public key of the verification network element (the public key of the verification network element may be preconfigured), and encrypts the user identifier, the profile information corresponding to the user identifier, the random number 1, the session identifier, and the like by using the session key. A type of the user identifier is not limited in this application.

Step 1002: The terminal sends the first ciphertext and a plaintext part to the verification network element, and correspondingly, the verification network element receives the first ciphertext and the plaintext part.

For descriptions of step 1002, refer to step 602.

Step 1003: The verification network element obtains the user identifier, the profile information, the random number 1, and the session identifier through decryption.

For example, the verification network element may generate the session key by using a private key of the verification network element and an ephemeral public key of the terminal, and decrypt the first ciphertext based on the session key, to obtain the user identifier, the profile information, the random number 1, and the session identifier.

Step 1004: The verification network element obtains a hash value of the corresponding profile information from a storage network element based on the user identifier.

For example, the verification network element sends the user identifier to the storage network element, and correspondingly, the storage network element receives the user identifier. Further, the storage network element obtains the hash value of the corresponding profile information based on the user identifier. Further, the storage network element sends the hash value of the profile information to the verification network element, and correspondingly, the verification network element receives the hash value of the profile information.

Step 1005: The verification network element verifies the profile information from the terminal based on the hash value of the profile information.

If the verification succeeds, step 1006 continues to be performed.

Step 1006: The verification network element generates a random number 2, and signs a fourth message based on the private key of the verification network element. The fourth message may be one or more of all messages exchanged between the terminal and the verification network element.

For example, the fourth message may be a message sent by the terminal to the verification network element in step 1002, or may be a third message sent by the verification network element to the terminal in step 1007. This is not limited in this application.

It may be understood that the verification network element may alternatively sign a hash value of the fourth message based on the private key of the verification network element. This is not limited in this application.

Step 1007: The verification network element sends a digital signature of the verification network element and the third message to the terminal, where the third message includes an identifier of the verification network element, the random number 1, and the random number 2, and correspondingly, the terminal receives the digital signature of the verification network element and the third message.

The third message may be encrypted, for example, may be encrypted based on the session key generated by the verification network element.

Step 1008: The terminal verifies the digital signature of the verification network element based on the public key of the verification network element, and signs a second message based on a private key of the terminal.

The second message may be one or more of all messages exchanged between the terminal and the verification network element. For example, the second message may be the message sent by the terminal to the verification network element in step 1002 and the third message sent by the verification network element to the terminal in step 1007, or may be a first message sent by the terminal to the verification network element in step 1009. This is not limited in this application.

It may be understood that the terminal may alternatively sign a hash value of the second message based on the private key of the terminal. This is not limited in this application.

Step 1009: The terminal sends a digital signature of the terminal and the first message to the verification network element, where the first message includes the user identifier, the profile information, the random number 1, and the random number 2, and correspondingly, the verification network element receives the digital signature of the terminal and the first message.

The first message may be encrypted, for example, may be encrypted based on the session key generated by the terminal.

Step 1010: The verification network element verifies the digital signature of the terminal based on a public key of the terminal.

After receiving the digital signature of the terminal and the first message, the verification network element verifies the digital signature of the terminal based on the public key of the terminal in the profile information. If the verification performed by the verification network element on the digital signature of the terminal succeeds, it is considered that authentication performed by the verification network element on the terminal succeeds. Correspondingly, if the verification performed by the verification network element on the digital signature of the terminal fails, it is considered that the authentication performed by the verification network element on the terminal fails.

Step 1011: The verification network element sends, to the terminal, an indication message indicating that network registration and access succeed, and correspondingly, the terminal receives the indication message.

For more detailed descriptions of FIG. 10, refer to FIG. 6. Details are not described herein again.

Based on the foregoing technical solution, the terminal may send, to the verification network element, the user identifier and the profile information corresponding to the user identifier, so that the verification network element completes authentication on the terminal based on the profile information. The verification network element may be the network element of the target operator accessed by the terminal. In other words, even if the verification network element is not a network element of a home operator, the verification network element may also obtain the profile information corresponding to the user identifier, to complete authentication on the terminal, without returning to the home operator for authentication. This helps simplify an authentication procedure.

The foregoing describes in detail the method provided in embodiments of this application with reference to the accompanying drawings. The following describes in detail apparatuses provided in embodiments of this application with reference to the accompanying drawings.

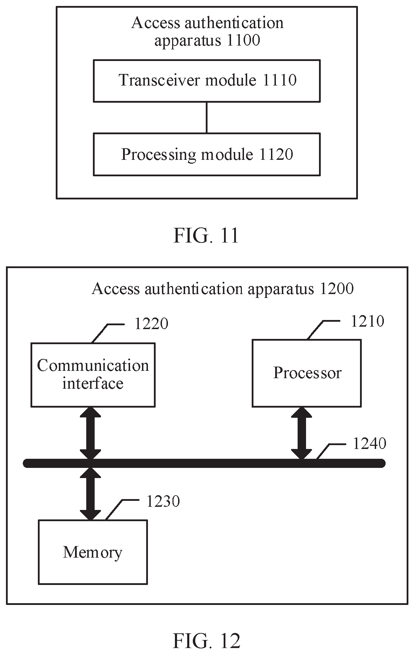

It should be understood that the apparatuses shown in FIG. 11 and FIG. 12 may be configured to implement functions of the terminal, the verification network element, or the storage network element in the foregoing method embodiments, and therefore may also implement beneficial effects of the foregoing method embodiments.

FIG. 11 is a block diagram of an access authentication apparatus 1100 according to an embodiment of this application.

As shown in FIG. 11, the apparatus 1100 may include a transceiver module 1110 and a processing module 1120. The apparatus 1100 may be configured to implement the functions of the terminal, the verification network element, or the storage network element in any one of the foregoing method embodiments shown in FIG. 3 to FIG. 10.

When the apparatus 1100 is configured to implement the functions of the verification network element in the method embodiment shown in FIG. 3, the transceiver module 1110 may be configured to receive a user identifier from a terminal; and the processing module 1120 may be configured to: obtain, from a storage network element, profile information corresponding to the user identifier, where the profile information includes a public key of the terminal; and authenticate the terminal based on the profile information.

In a possible implementation, the processing module 1120 is specifically configured to: receive, from the terminal, a first message and a digital signature of the terminal, where the digital signature of the terminal is obtained by signing a second message or a hash value of the second message based on a private key of the terminal, and the second message is a message exchanged between the terminal and the verification network element or the first message; and verify the digital signature of the terminal based on the public key of the terminal.

In a possible implementation, the processing module 1120 is further configured to: obtain an authentication credential of an issuer from the storage network element, where the issuer is an issuer of an authentication credential of the terminal; and verify the authentication credential of the terminal based on the authentication credential of the issuer.

In a possible implementation, the transceiver module 1110 may be further configured to send a third message and a digital signature of the verification network element to the terminal, where the digital signature of the verification network element is obtained by signing a fourth message or a hash value of the fourth message based on a private key of the verification network element, and the fourth message is a message exchanged between the terminal and the verification network element or the third message.

In a possible implementation, the transceiver module 1110 may be further configured to send a certificate of the verification network element to the terminal.

In a possible implementation, the profile information further includes at least one authentication credential and an algorithm corresponding to each of the at least one authentication credential; the processing module 1120 may be further configured to determine a target authentication credential from the at least one authentication credential; and the transceiver module 1110 may be further configured to send first indication information to the terminal, where the first indication information indicates the target authentication credential and/or an algorithm corresponding to the target authentication credential.

When the apparatus 1100 is configured to implement the functions of the terminal in the method embodiment shown in FIG. 3, the processing module 1120 may be configured to obtain a user identifier; and the transceiver module 1110 may be configured to send the user identifier to a verification network element, where the verification network element is a network element of a target operator accessed by the terminal, the user identifier corresponds to profile information stored in a storage network element, the profile information includes a public key of the terminal, and the profile information is used to authenticate the terminal.

In a possible implementation, the transceiver module 1110 may be further configured to receive, from the verification network element, a third message and a digital signature of the verification network element, where the digital signature of the verification network element is obtained by signing a fourth message or a hash value of the fourth message based on a private key of the verification network element, and the fourth message is a message exchanged between the terminal and the verification network element or the third message; and the processing module 1120 may be further configured to verify the digital signature of the verification network element based on a public key of the verification network element.

In a possible implementation, the transceiver module 1110 may be further configured to send a first message and a digital signature of the terminal to the verification network element, where the digital signature of the terminal is obtained by signing a second message or a hash value of the second message based on a private key of the terminal, and the second message is a message exchanged between the terminal and the verification network element or the first message.

In a possible implementation, the transceiver module 1110 may be further configured to receive a certificate of the verification network element.

In a possible implementation, the processing module 1120 may be further configured to determine the target operator from a plurality of operators.

In a possible implementation, the processing module 1120 is specifically configured to determine the target operator from the plurality of operators based on one or more of a user location, quality of service of each of the plurality of operators, fees of each of the plurality of operators, or security of each of the plurality of operators.

In a possible implementation, the processing module 1120 is specifically configured to determine the target operator from the plurality of operators in response to a user operation, where the user operation is an operation of selecting the target operator from the plurality of operators by a user.

In a possible implementation, the user identifier is carried in first signaling, the first signaling further includes a type of the user identifier and/or an identifier of a distributed storage system, and the identifier of the distributed storage system is used to identify a distributed storage system in which the profile information corresponding to the user identifier is located.

When the apparatus 1100 is configured to implement the functions of the storage network element in the method embodiment shown in FIG. 3, the transceiver module 1110 may be configured to receive a user identifier of a terminal from a verification network element, where the verification network element is a network element of a target operator accessed by the terminal; the processing module 1120 may be configured to determine, based on the user identifier, profile information corresponding to the user identifier, where the profile information includes a public key of the terminal, and the profile information is used to authenticate the terminal; and the transceiver module 1110 may be further configured to send the profile information to the verification network element.

In a possible implementation, the user identifier includes a decentralized user root credential, a decentralized user identifier credential, a decentralized self-sovereign identity credential, or a self-sovereign identity credential.

In a possible implementation, the user identifier includes a pseudonym identifier, there is a correspondence between the pseudonym identifier and a real identifier, and the storage network element stores the real identifier and corresponding profile information.

In a possible implementation, the user identifier includes a transaction address, and the transaction address indicates a location of the profile information corresponding to the user identifier or a hash value of the profile information in the distributed storage system.

In a possible implementation, the storage network element is a node in the distributed storage system, and the node stores at least one user identifier and profile information corresponding to each user identifier.

In a possible implementation, the distributed storage system is a blockchain, a decentralized shared profile information storage system, or an interplanetary file system.

For more detailed descriptions of each module, directly refer to the related descriptions in the method embodiment shown in FIG. 3. Details are not described herein again.

It should be understood that module division in embodiments of this application is an example, and is only logical function division. During actual implementation, there may be another division manner. In addition, functional modules in embodiments of this application may be integrated into one processor, or may exist alone physically, or two or more modules may be integrated into one module. The integrated module may be implemented in a form of hardware, or may be implemented in a form of a software functional module.

FIG. 12 is another block diagram of an access authentication apparatus 1200 according to an embodiment of this application.

The apparatus 1200 may be a chip system, or may be a device configured with the chip system, to implement the method in the foregoing method embodiments. In embodiments of this application, the chip system may include a chip or may include the chip and another discrete device.

As shown in FIG. 12, the apparatus 1200 may include a processor 1210. The processor 1210 may be configured to execute a computer program or instructions in a memory, to implement the steps performed by the terminal, the verification network element, or the storage network element in any one of embodiments shown in FIG. 3 to FIG. 10.

Optionally, the apparatus 1200 further includes a communication interface 1220. The communication interface 1220 may be configured to communicate with another device through a transmission medium, so that the apparatus 1200 may communicate with the another device. The communication interface 1220 may be, for example, a transceiver, an interface, a bus, a circuit, or an apparatus that can implement a transceiver function. The processor 1210 may input/output data through the communication interface 1220, and is configured to implement the steps performed by the terminal, the verification network element, or the storage network element in any one of embodiments shown in FIG. 3 to FIG. 10.

Optionally, the apparatus 1200 further includes at least one memory 1230, configured to store program instructions and/or data. The memory 1230 is coupled to the processor 1210. The coupling in embodiments of this application may be an indirect coupling or a communication connection between apparatuses, units, or modules in an electrical form, a mechanical form, or another form, and is used for information exchange between the apparatuses, the units, or the modules. The processor 1210 and the memory 1230 may operate cooperatively. The processor 1210 may execute the program instructions stored in the memory 1230. At least one of the at least one memory may be included in the processor.

It should be understood that the coupling in embodiments of this application may be an indirect coupling or a communication connection between apparatuses, units, or modules in an electrical form, a mechanical form, or another form, and is used for information exchange between the apparatuses, the units, or the modules. The processor 1210 and the memory 1230 may operate cooperatively. A specific connection medium between the processor 1210, the communication interface 1220, and the memory 1230 is not limited in embodiments of this application. Optionally, the processor 1210, the communication interface 1220, and the memory 1230 are connected through a bus 1240. The bus 1240 is represented by using a bold line in FIG. 12, and a connection manner between other components is merely described as an example and is not limited thereto. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line indicates the bus in FIG. 12, but this does not mean that there is only one bus or only one type of bus.

In a possible implementation, the apparatus 1200 is a system-on-a-chip (System-On-a-Chip, SoC). Alternatively, the processor 1210 is an SoC.

This application further provides a computer program product. The computer program product includes a computer program (which may also be referred to as code or instructions). When the computer program is run, the steps performed by the terminal, the verification network element, or the storage network element in any one of embodiments shown in FIG. 3 to FIG. 10 may be implemented.

This application further provides a computer-readable storage medium. The computer-readable storage medium stores a computer program (which may also be referred to as code or instructions). When the computer program is run, the steps performed by the terminal, the verification network element, or the storage network element in any one of embodiments shown in FIG. 3 to FIG. 10 may be implemented.

An embodiment of this application provides an access authentication system. The system includes the terminal, the verification network element, and the storage network element described above.

It should be noted that the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of an example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

Terms such as "unit" and "module" used in this specification may represent computer-related entities, hardware, firmware, combinations of hardware and software, software, or software being executed. The units and the modules in embodiments of this application have a same meaning, and may be used interchangeably.

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

In the foregoing embodiments, all or some of the functions of the functional units may be implemented by using software, hardware, firmware, or any combination thereof. When software is used to implement embodiments, all or a part of embodiments may be implemented in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), or an optical medium (for example, a digital versatile disc (digital video disc, DVD)), a semiconductor medium (for example, a solid-state drive (solid-state drive, SSD)), or the like.

When the functions are implemented in the form of a software functional unit and sold or used as an independent product, the functions may be stored in a computer-readable storage medium. Based on such an understanding, the technical solutions of this application essentially, the part contributing to the technology, or a part of the technical solutions may be implemented in a form of a software product. The computer software product is stored in a storage medium, and includes several instructions for enabling a computing device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An access authentication method, applied to a verification network element, wherein the verification network element is a network element of a target operator accessed by a terminal, and the method comprises:
receiving a user identifier from the terminal;
obtaining, from a storage network element, profile information corresponding to the user identifier, wherein the profile information comprises a public key of the terminal; and
authenticating the terminal based on the profile information.

2. The method according to claim 1, wherein the authenticating the terminal based on the profile information comprises:
receiving, from the terminal, a first message and a digital signature of the terminal, wherein the digital signature of the terminal is obtained by signing a second message or a hash value of the second message based on a private key of the terminal, and the second message is a message exchanged between the terminal and the verification network element or the first message; and
verifying the digital signature of the terminal based on the public key of the terminal.

3. The method according to claim 2, wherein before verifying the digital signature of the terminal based on the public key of the terminal, the method further comprises:
obtaining an authentication credential of an issuer from the storage network element, wherein the issuer is an issuer of an authentication credential of the terminal; and
verifying the authentication credential of the terminal based on the authentication credential of the issuer.

4. The method according to any one of claims 1 to 3, wherein the method further comprises:
sending a third message and a digital signature of the verification network element to the terminal, wherein the digital signature of the verification network element is obtained by signing a fourth message or a hash value of the fourth message based on a private key of the verification network element, and the fourth message is a message exchanged between the terminal and the verification network element or the third message.

5. The method according to claim 4, wherein the method further comprises:
sending a certificate of the verification network element to the terminal.

6. The method according to any one of claims 1 to 5, wherein the profile information further comprises at least one authentication credential and an algorithm corresponding to each of the at least one authentication credential; and the method further comprises:
determining a target authentication credential from the at least one authentication credential; and
sending first indication information to the terminal, wherein the first indication information indicates the target authentication credential and/or an algorithm corresponding to the target authentication credential.

7. An access authentication method, applied to a terminal, wherein the method comprises:
obtaining a user identifier; and
sending the user identifier to a verification network element, wherein the verification network element is a network element of a target operator accessed by the terminal, the user identifier corresponds to profile information stored in a storage network element, the profile information comprises a public key of the terminal, and the profile information is used to authenticate the terminal.

8. The method according to claim 7, wherein the method further comprises:
receiving, from the verification network element, a third message and a digital signature of the verification network element, wherein the digital signature of the verification network element is obtained by signing a fourth message or a hash value of the fourth message based on a private key of the verification network element, and the fourth message is a message exchanged between the terminal and the verification network element or the third message; and
verifying the digital signature of the verification network element based on a public key of the verification network element.

9. The method according to claim 7 or 8, wherein the method further comprises:
sending a first message and a digital signature of the terminal to the verification network element, wherein the digital signature of the terminal is obtained by signing a second message or a hash value of the second message based on a private key of the terminal, and the second message is a message exchanged between the terminal and the verification network element or the first message.

10. The method according to claim 9, wherein the method further comprises:
receiving a certificate of the verification network element.

11. The method according to any one of claims 7 to 10, wherein before the obtaining the user identifier, the method further comprises:
determining the target operator from a plurality of operators.

12. The method according to claim 11, wherein the determining the target operator from the plurality of operators comprises:
determining the target operator from the plurality of operators based on one or more of a user location, quality of service of each of the plurality of operators, fees of each of the plurality of operators, or security of each of the plurality of operators.

13. The method according to claim 11, wherein the determining the target operator from the plurality of operators comprises:
determining the target operator from the plurality of operators in response to a user operation, wherein the user operation is an operation of selecting the target operator from the plurality of operators by a user.

14. The method according to any one of claims 1 to 13, wherein the user identifier is carried in first signaling, the first signaling further comprises a type of the user identifier and/or an identifier of a distributed storage system, and the identifier of the distributed storage system is used to identify a distributed storage system in which the profile information corresponding to the user identifier is located.

15. An access authentication method, applied to a storage network element, wherein the method comprises:
receiving a user identifier of a terminal from a verification network element, wherein the verification network element is a network element of a target operator accessed by the terminal;
determining, based on the user identifier, profile information corresponding to the user identifier, wherein the profile information comprises a public key of the terminal, and the profile information is used to authenticate the terminal; and
sending the profile information to the verification network element.

16. The method according to any one of claims 1 to 15, wherein the user identifier comprises a decentralized user root credential, a decentralized user identifier credential, a decentralized self-sovereign identity credential, or a self-sovereign identity credential.

17. The method according to any one of claims 1 to 15, wherein the user identifier comprises a pseudonym identifier, there is a correspondence between the pseudonym identifier and a real identifier, and the storage network element stores the real identifier and corresponding profile information.

18. The method according to any one of claims 1 to 17, wherein the user identifier comprises a transaction address, and the transaction address indicates a location of the profile information corresponding to the user identifier or a hash value of the profile information in the distributed storage system.

19. The method according to any one of claims 1 to 18, wherein the storage network element is a node in the distributed storage system, and the node stores at least one user identifier and profile information corresponding to each user identifier.

20. The method according to claim 19, wherein the distributed storage system is a blockchain, a decentralized shared profile information storage system, or an interplanetary file system.

21. An access authentication method, applied to a verification network element, wherein the method comprises:
receiving a user identifier from a terminal and profile information corresponding to the user identifier, wherein the profile information comprises a public key of the terminal; and
authenticating the terminal based on the profile information.

22. The method according to claim 21, wherein the authenticating the terminal based on the profile information comprises:
receiving, from the terminal, a first message and a digital signature of the terminal, wherein the digital signature of the terminal is obtained by signing a second message or a hash value of the second message based on a private key of the terminal, and the second message is a message exchanged between the terminal and the verification network element or the first message; and
verifying the digital signature of the terminal based on the public key of the terminal.

23. The method according to claim 21 or 22, wherein the method further comprises:
sending a third message and a digital signature of the verification network element to the terminal, wherein the digital signature of the verification network element is obtained by signing a fourth message or a hash value of the fourth message based on a private key of the verification network element, and the fourth message is a message exchanged between the terminal and the verification network element or the third message.

24. The method according to claim 23, wherein the method further comprises:
sending a certificate of the verification network element to the terminal.

25. The method according to any one of claims 21 to 24, wherein the method further comprises:
obtaining, from a storage network element based on the user identifier, a hash value of the profile information corresponding to the user identifier; and
verifying the profile information based on the hash value.

26. An access authentication method, applied to a terminal, wherein the method comprises:
obtaining a user identifier of the terminal and profile information corresponding to the user identifier, wherein the profile information comprises a public key of the terminal; and
sending, to a verification network element, the user identifier and the profile information corresponding to the user identifier, wherein the verification network element is a network element of a target operator accessed by the terminal, and the profile information is used to authenticate the terminal.

27. The method according to claim 26, wherein the method further comprises:
receiving, from the verification network element, a third message and a digital signature of the verification network element, wherein the digital signature of the verification network element is obtained by signing a fourth message or a hash value of the fourth message based on a private key of the verification network element, and the fourth message is a message exchanged between the terminal and the verification network element or the third message; and
verifying the digital signature of the verification network element based on a public key of the verification network element.

28. The method according to claim 26 or 27, wherein the method further comprises:
sending a first message and a digital signature of the terminal to the verification network element, wherein the digital signature of the terminal is obtained by signing a second message or a hash value of the second message based on a private key of the terminal, and the second message is a message exchanged between the terminal and the verification network element or the first message.

29. The method according to claim 28, wherein the method further comprises:
receiving a certificate of the verification network element.

30. The method according to any one of claims 26 to 29, wherein the method further comprises:
determining the target operator from a plurality of operators.

31. The method according to claim 30, wherein the determining the target operator from the plurality of operators comprises:
determining the target operator from the plurality of operators based on one or more of a user location, quality of service of each of the plurality of operators, fees of each of the plurality of operators, or security of each of the plurality of operators.

32. The method according to claim 30, wherein the determining the target operator from the plurality of operators comprises:
determining the target operator from the plurality of operators in response to a user operation, wherein the user operation is an operation of selecting the target operator from the plurality of operators by a user.

33. The method according to any one of claims 21 to 32, wherein the user identifier is carried in first signaling, the first signaling further comprises a type of the user identifier and/or an identifier of a distributed storage system, and the identifier of the distributed storage system is used to identify a distributed storage system in which the profile information corresponding to the user identifier is located.

34. An access authentication method, applied to a storage network element, wherein the method comprises:
receiving a user identifier of a terminal from a verification network element, wherein the verification network element is a network element of a target operator accessed by the terminal;
determining, based on the user identifier, a hash value of profile information corresponding to the user identifier, wherein the profile information comprises a public key of the terminal; and
sending the hash value of the profile information to the verification network element.

35. The method according to any one of claims 21 to 34, wherein the user identifier comprises a DRC, a DIC, a DSCC, or an SCIC.

36. The method according to any one of claims 21 to 34, wherein the user identifier comprises a pseudonym identifier, there is a correspondence between the pseudonym identifier and a real identifier, and the storage network element stores the real identifier and a hash value of corresponding profile information.

37. The method according to any one of claims 21 to 36, wherein the user identifier comprises a transaction address, and the transaction address indicates a location of the hash value of the profile information corresponding to the user identifier in the distributed storage system.

38. The method according to any one of claims 21 to 37, wherein the storage network element is a node in the distributed storage system, and the node stores at least one user identifier and a hash value of profile information corresponding to each user identifier.

39. The method according to claim 38, wherein the distributed storage system is a blockchain, a decentralized shared profile information storage system, or an interplanetary file system.

40. An access authentication apparatus, comprising a module configured to implement the method according to any one of claims 1 to 6, 14, and 16 to 20; or comprising a module configured to implement the method according to any one of claims 7 to 14 and 16 to 20; or comprising a module configured to implement the method according to any one of claims 15 to 20; or comprising a module configured to implement the method according to any one of claims 21 to 25, 33, and 35 to 39; or comprising a module configured to implement the method according to any one of claims 26 to 33 and 35 to 39; or comprising a module configured to implement the method according to any one of claims 34 to 39.

41. An access authentication apparatus, comprising a processor, wherein the processor is coupled to a memory;
the memory is configured to store a computer program; and
the processor is configured to invoke the computer program, to cause the apparatus to implement the method according to any one of claims 1 to 6, 14, and 16 to 20, or implement the method according to any one of claims 7 to 14 and 16 to 20, or implement the method according to any one of claims 15 to 20, or implement the method according to any one of claims 21 to 25, 33, and 35 to 39, or implement the method according to any one of claims 26 to 33 and 35 to 39, or implement the method according to any one of claims 34 to 39.

42. A computer-readable storage medium, wherein the storage medium stores a computer program or instructions; and when the computer program or the instructions are executed by a computer, the method according to any one of claims 1 to 39 is implemented.

43. A computer program product, wherein the computer program product comprises instructions, and when the instructions are run by a computer, the method according to any one of claims 1 to 39 is implemented.

44. A communication system, comprising a verification network element and a storage network element, wherein the verification network element is configured to implement the method according to any one of claims 1 to 6, 14, and 16 to 20; and the storage network element is configured to implement the method according to any one of claims 15 to 20; or the verification network element is configured to implement the method according to any one of claims 21 to 25, 33, and 35 to 39; and the storage network element is configured to implement the method according to any one of claims 34 to 39.

45. The communication system according to claim 44, further comprising a terminal, wherein the terminal is configured to implement the method according to any one of claims 7 to 14 and 16 to 20; or the terminal is configured to implement the method according to any one of claims 26 to 33 and 35 to 39.
